# EUROPÄISCHE PATENTSCHRIFT

(11) **EP 2 826 117 B1**
(45) Veröffentlichungstag und Bekanntmachung des Hinweises auf die Patenterteilung: **01.06.2016**
(21) Anmeldenummer: 12720450.1
(22) Anmeldetag: 20.04.2012
(51) Int. Cl.: H02H 3/08, H02H 5/04, H01H 71/14, H01H 83/20, H01H 11/00

(54) **VORRICHTUNG ZUM SCHUTZ EINES VERBRAUCHERS**
DEVICE FOR PROTECTING A USER
DISPOSITIF DE PROTECTION D'UN CONSOMMATEUR

(43) Veröffentlichungstag der Anmeldung: 21.01.2015
(73) Patentinhaber: Siemens Aktiengesellschaft, 80333 München (DE)
(72) Erfinder: FEIL, Wolfgang, 92421 Schwandorf (DE); MAIER, Martin, 92681 Erbendorf (DE); PFITZNER, Klaus, 92224 Amberg (DE); RÖSCH, Bernhard, 92237 Sulzbach-Rosenberg (DE)
(86) Internationale Anmeldenummer: PCT/EP2012/057284
(87) Internationale Veröffentlichungsnummer: WO 2013/156080

(56) Entgegenhaltungen:
- DE-A1- 10 017 372
- US-A- 5 546 262
- US-A- 6 031 703

## Beschreibung

Die Erfindung betrifft eine Vorrichtung zum Schutz eines Verbrauchers vor einer Überlast, insbesondere einer thermischen Überlast.

Als Verbraucher wird hierbei insbesondere ein Elektromotor (z.B.: Asynchronmotor) gesehen. Eine thermische Überlast am Verbraucher entsteht durch einen überhöhten Stromfluss. Ein überhöhter Stromfluss kann beispielsweise durch eine mechanische Überlast an einem Elektromotor oder durch einen Ausfall einer oder zweier Strompfade (Phasen) des Elektromotors hervorgerufen werden. Hierbei kommt es zu einer unerwünschten Temperaturentwicklung am Verbraucher, was letztendlich zu einer Beschädigung des Verbrauchers führen kann.

Zur Ermittlung einer anstehenden thermischen Überlast eines elektrischen Verbrauchers werden meist Vorrichtungen in den Strompfad, über welchen der Verbraucher mit elektrischer Energie versorgt wird, integriert, so dass mittels dieser Vorrichtungen eine anstehende thermische Überlast detektiert werden kann. Hierbei kann eine einphasige aber auch eine mehrphasige Überwachung erfolgen, d.h. es kann ein einzelner Strompfad (eine Phase) aber auch mehrere Strompfade (mehrere Phasen) des Verbrauchers überwacht werden.

Die entsprechenden Vorrichtungen weisen je zu überwachenden Strompfad eine Strombahn auf, über welche die über den Strompfad erfolgende Energieversorgung geführt wird. Die elektrische Energie des Verbrauchers wird somit mittels der Strombahn durch die Vorrichtung geleitet. Mittels einer Überwachungseinrichtung der Vorrichtung wird der Stromfluss der Strombahn überwacht, so dass eine anstehende Überlast des Verbrauchers detektiert werden kann. Derartige Vorrichtungen sind beispielsweise Überlastrelais oder Leistungsschalter. Ein Leistungsschalter weist für einen nachgeschalteten Verbraucher neben einem Schutz vor einer thermischen Überlast durch einen A-Auslöser ferner einen Kurzschlussschutz durch einen N-Auslöser auf.

Die Vorrichtung der vorliegenden Anmeldung soll insbesondere ein Überlastschutz für einen Verbraucher (z.B. Elektromotoren, Leitungen, Transformatoren und Generatoren) bereitstellen.

An eine Vorrichtung zur Ermittlung einer thermischen Überlast eines Verbrauchers können unterschiedliche Anforderungen gestellt werden:
- Die Vorrichtung soll möglichst sowohl AC- als auch DC-Ströme überwachen können, so dass sowohl AC- als auch DC-Verbraucher auf Überlast überwacht werden können.
- Die Vorrichtung soll einen möglichst großen Einstellbereich aufweisen. Der Einstellbereich ist der Bereich, in welchen eine Überwachung des Betriebsstromes des elektrischen Verbrauchers erfolgen kann. Er wird durch die Betriebsstromobergrenze I_{O} und Betriebsstromuntergrenze I_{U} begrenzt (I_{O} zu I_{U}). Mittels eines Einstellmittels (z.B. Einstellschraube) an der Vorrichtung kann der thermische Überlastauslöser auf den jeweiligen Nennstrom des Verbrauchers eingestellt werden, so dass eine gezielte Überwachung des nachgeschalteten zu überwachenden Verbrauchers erfolgen kann.
- Die Vorrichtung soll eine möglichst geringe Verlustleistung erzeugen.
- Die Vorrichtung soll eine möglichst einfache galvanische Trennung zwischen der zu überwachenden Strombahn und der Überwachungseinrichtung, welche die Überlast detektiert, aufweisen.
- Die Vorrichtung soll ein thermisches Gedächtnis besitzen. D.h. wird eine anstehende thermische Überlast eines Verbrauchers ermittelt, so sollte die Stromzufuhr zum Verbraucher solange unterbrochen werden, bis ein Abkühlen des Verbrauchers sichergestellt ist. Es sollte somit kein sofortiges Zuschalten eines Verbrauchers nach einer ermittelten thermischen Überlast ermöglicht werden.

Bei einer anstehenden thermischen Überlast eines Verbrauchers kommt es in den einzelnen Strompfaden (Phasen) des Verbrauchers zu einem erhöhten Stromanstieg. Eine dem Verbraucher vorgeschaltete Vorrichtung zur Überwachung einer thermischen Überlast des Verbrauchers kann folglich durch eine Überwachung seiner Strombahn diesen erhöhten Stromanstieg detektieren und auswerten. Hierfür können unterschiedliche Messprinzipien angewandt werden. Die Ermittlung einer anstehenden Überlast kann somit mittels unterschiedlicher Überwachungseinrichtungen der Vorrichtung erfolgen. Überwachungseinrichtungen zur Detektion einer Überlast eines Verbrauchers umfassen üblicherweise je zu überwachende Phase des Verbrauchers an der entsprechenden Strombahn einen Bimetallauslöser, einen Stromwandler oder einen Shunt.

Bei einer Überwachung mittels eines Bimetallauslösers wird die zu überwachende Strombahn mit einem Bimetallauslöser derart gekoppelt, dass es durch den Stromanstieg zu einer Erwärmung des Bimetallauslösers und letztendlich zu einer räumlichen Auslenkung eines Teils des Bimetallauslösers kommt. Diese Auslenkung wird detektiert und weiter ausgewertet. Mittels eines Bimetallauslösers können sowohl Gleichströme als auch Wechselströme erfasst werden. Der typische Einstellbereich des Bimetallauslösers liegt bei 1 zu 1,6. Nachteilig am Bimetallauslöser ist, dass er eine hohe Verlustleistung generiert. Das thermische Gedächtnis und die galvanische Trennung zwischen den einzelnen Strompfaden (Phasen) sind bei dem Bimetallauslöser hingegen mit geringem Aufwand zu realisieren.

Bei einer Überwachung mittels eines Stromwandlers ermittelt der jeweilige Stromwandler den Stromfluss seiner Strombahn, so dass eine Auswerteeinheit eine weiterführende Analyse des Stromflusses durchführen kann, und letztendlich eine anstehende Überlast detektieren kann. Nachteilig dieser Messmethode ist, dass keine DC-Ströme erfasst werden können. Der Einstellbereich liegt bei 1 zu 10 und die Verlustleistung ist niedrig. Ein thermisches Gedächtnis kann jedoch durch die Stromwandler selbst nicht nachgebildet werden.

Bei einer Überwachung mittels eines Shunts ist der Shunt in der Strombahn integriert, so dass über diesen ein den Stromfluss charakterisierender Spannungsabgriff erfolgen kann. Durch eine nachgeschaltete Analyse der am Shunt anliegenden Spannung kann eine anstehende thermische Überlast ermittelt werden. Mittels eines Shunt-Messverfahrens ist eine Erfassung von AC/DC-Strömen möglich. Der Einstellbereich liegt üblicherweise bei 1 zu 4. Nachteilig an dem Messverfahren mittels eines Shunts ist, dass durch den Spannungsabgriff am Shunt kein thermisches Gedächtnis nachgebildet wird und die galvanische Trennung der einzelnen Phasen nur mit großem Aufwand möglich ist.

DE 100 17 372 A1 offenbart eine Vorrichtung zum Schutz eines Verbrauchers gemäß dem Oberbegriff des Anspruchs 1.

Der Erfindung liegt die Aufgabe zugrunde, eine kostengünstige Vorrichtung bereitzustellen mit welcher eine Ermittlung einer anstehenden Überlast eines Verbrauchers erfolgen kann. Insbesondere sollen mittels der Vorrichtung sowohl Gleichströme als auch Wechselströme überwacht werden können. Ferner soll vorzugsweise eine einfache galvanische Trennung der Überwachungseinrichtung von der zu überwachenden Strombahn ermöglicht werden. Die Vorrichtung soll vorzugsweise hinsichtlich der thermischen und elektrischen Belastungen optimiert ausgebildet sein.

Diese Aufgabe wird gelöst durch eine Vorrichtung gemäß Anspruch 1, d.h. durch eine Vorrichtung zum Schutz eines Verbrauchers, wobei die Vorrichtung eine erste Strombahn, welche eine erste und eine zweite Leitung umfasst, und eine Überwachungseinrichtung, zur Ermittlung einer anstehenden Überlast des elektrischen Verbrauchers, umfasst, wobei die Überwachungseinrichtung eine erste Temperaturmesseinheit, einen Träger, eine Auswerteeinheit und einen ersten Messwandler, welcher eine elektrisch leitende Verbindung zwischen der ersten und der zweiten Leitungen der ersten Strombahn herstellt, umfasst, wobei die erste Temperaturmesseinheit von dem ersten Messwandler galvanisch getrennt ist und einen ersten Temperaturfühler umfasst, wobei auf einer ersten Seitenfläche des Trägers ein zusätzliches elektrisch isolierendes Material zwischen dem ersten Messwandler und dem Träger angeordnet ist und der erste Temperaturfühler auf dem Träger derart angeordnet ist, dass er eine Temperatur des ersten Messwandlers erfassen kann, wobei die Auswerteeinheit eine anstehende Überlast am Verbraucher mittels erfassten Temperaturen des ersten Temperaturfühlers ermitteln kann.

Vorteilhafte Weiterbildungen der Erfindung sind in den abhängigen Ansprüchen 2 bis 15 angegeben.

Die Strombahn ist insbesondere ein Teil einer Zuleitung einer Energieversorgung des Verbrauchers. Die Zuleitung wird ebenso Hauptstrombahn oder Phase genannt. Im aktiven Betrieb des Verbrauchers (z.B. Elektromotor) fließt durch die Strombahn und somit durch den ersten Messwandler ein zeitabhängiger Motorstrom, welcher im ersten Messwandler in Abhängigkeit der Stromhöhe und der Stromflusszeit zu einer definierten Erwärmung des ersten Messwandlers (strombedingte Erwärmung) führt. Bei einer anstehenden Überlast des Verbrauchers ist das thermische Verhalten des ersten Messwandlers gegenüber dem thermischen Verhalten im Standardbetrieb des Verbrauchers charakteristisch. Insbesondere liegt bei einer anstehenden Überlast gegenüber dem Standardbetrieb am ersten Messwandler eine erhöhte Temperatur vor. Durch die erste Temperaturmesseinheit und insbesondere dem ersten Temperaturfühler kann die Temperatur des ersten Messwandlers erfasst und der Auswerteeinheit bereitgestellt werden. Seitens der Auswerteeinheit kann anhand der erfassten Temperaturen des ersten Temperaturfühlers das charakteristische Erwärmungsverhalten des ersten Messwandlers ermittelt und ausgewertet werden, so dass hieraus eine anstehende Überlast am Verbraucher erkannt wird.

Durch die Auswerteeinheit erfolgt vorzugsweise eine Analyse der ermittelten Temperatur des ersten Messwandlers über die Zeit, so dass hieraus eine anstehende Überlast am Verbraucher erkannt werden kann. Hierbei wird vorzugsweise das Erwärmungsverhalten des ersten Messwandlers während eines definierten Zeitintervalls ausgewertet.

Unter dem Erwärmungsverhalten des ersten Messwandlers wird insbesondere die zeitliche Veränderung der durch den ersten Temperaturfühler erfassten Temperatur einer Temperaturmessstelle an dem ersten Messwandler oder die zeitliche Veränderung einer Temperaturdifferenz zwischen zwei bzw. mehreren Temperaturmessstellen (z.B. Temperaturdifferenz zwischen der Temperatur des ersten Messwandler und einer Referenztemperatur) verstanden. Durch diese zeitliche Änderung der Temperatur bzw. der Temperaturdifferenz zweier Temperaturmessstellen, also dem Erwärmungsverhalten, kann auf den zeitlichen Stromverlauf geschlossen werden. Anhand dieses zeitlichen Stromverlaufs kann wiederum auf einen Überlastzustand am Verbraucher geschlossen werden.

Vorzugsweise erfolgen die zeitliche Abtastung der Temperaturmessstelle/-n, die eventuelle Temperaturdifferenzbestimmung, die Bestimmung der zeitlichen Temperaturänderung und der Rückschluss auf den zeitlichen Stromverlauf bzw. Überlastzustand in der Auswerteeinheit.

Der Träger ist insbesondere eine Leiterplatte. Die Leiterplatte ist vorzugsweise eine FR4 Leiterplatte, wobei "FR" für "flame retardant" (dt. flammen hemmend) und "4" für die Komponenten Epoxidharz und Glasfasergewebe steht.

In Abhängigkeit des über die erste Strombahn geführten Stroms können, insbesondere im Überlast-/ Kurzschlussfall, am ersten Messwandler Ströme entstehen, welche den Träger beschädigen können.

Dadurch, dass zwischen dem Träger und dem ersten Messwandler ein zusätzliches elektrisch isolierendes Material angeordnet ist, kann eine verbesserte elektrische Isolation des Trägers gegenüber den ersten Messwandler, insbesondere hinsichtlich der maximalen Ströme des ersten Messwandlers bei einem Kurzschluss oder im Überlastfall, erfolgen.

Das elektrisch isolierende Material ist insbesondere zusätzlich zum Träger als Beschichtung auf dem Träger oder als separates Bauelement zum Träger ausgebildet. Das zusätzliche elektrisch isolierende Material sorgt somit für eine elektrische Abschirmung des Trägers gegenüber dem Messwandler.

Sofern der erste Temperaturfühler auf der ersten Seitenfläche des Trägers angeordnet ist, so ist es denkbar, dass das elektrisch isolierende Material im Bereich zwischen dem Temperaturfühler und dem Träger angeordnet ist. Ebenso ist es denkbar, dass der Bereich zwischen dem Temperaturfühler und dem Träger nicht mit dem elektrisch isolierenden Material bedeckt ist und lediglich der Bereich um den Temperaturfühler herum mit dem elektrisch isolierenden Material bedeckt ist.

Vorzugsweise ist der Temperaturfühler selbst derart ausgebildet, dass er galvanische vom Messwandler getrennt ist.

Ein mit der Erfindung erzielte Vorteil besteht insbesondere darin, dass mittels der Vorrichtung sowohl AC- als auch DC-Ströme erfasst werden können. Es kann somit eine anstehende Überlast bei AC- und DC-Verbrauchern ermittelt werden. Ferner kann ein gegenüber einem Bimetall-Messverfahren verbesserter Einstellbereich erzielt werden. Ferner kann ein thermisches Gedächtnis realisiert werden, da bei einer anstehenden Überlast der erste Messwandler stark erhitzt wird, so dass anhand der Temperatur und somit Abkühlung des ersten Messwandlers ein Abkühlverhalten des Verbrauchers nachvollzogen werden kann. Vorzugsweise wird durch die Auswerteeinheit die Abkühlung des ersten Messwandlers ausgewertet, so dass ein vorzeitiges aktiveren des Verbrauchers verhindert werden kann.

In einer vorteilhaften Ausführungsform der Erfindung ist das zusätzliche elektrisch isolierende Material unmittelbar zwischen dem ersten Messwandler und dem Träger angeordnet und der erste Temperaturfühler ist auf einer der ersten Seitenfläche abgewandte zweite Seitenfläche des Trägers angeordnet.

Die erste Seitenfläche des Trägers ist vorzugsweise parallel zur zweiten Seitenfläche des Trägers ausgerichtet.

In einer vorteilhaften Ausführungsform der Erfindung ist der Bereich der ersten Seitenfläche des Trägers, welcher dem ersten Messwandler gegenüberliegt, vollständig mit dem zusätzlichen elektrisch isolierenden Material bedeckt.

Ein Bereich liegt einem anderen Element (hier dem Messwandler) gegenüber, wenn eine orthogonal zum Bereich ausgerichtete Gerade das andere Element schneidet. Die erste und/oder zweite Seitenfläche ist insbesondere eben ausgebildet.

Vorzugsweise bedeckt das elektrisch isolierende Material vollständig die erste Seitenfläche des Trägers.

In einer weiteren vorteilhaften Ausführungsform der Erfindung weist das zusätzliche elektrisch isolierende Material eine Durchschlagfestigkeit von 10 kV (Kilovolt) bezogen auf die Gesamtstärke des elektrisch isolierenden Materials auf.

Die Gesamtstärke des elektrisch isolierenden Materials ist insbesondere die Dicke des elektrisch isolierenden Materials; d.h. der Bereich, welcher zwischen dem Träger und dem ersten Messwandler liegt.

Die Durchschlagfestigkeit des elektrisch isolierenden Materials liegt vorzugsweise zwischen 10 kV bis 12 kV bezogen auf die Gesamtstärke des elektrisch isolierenden Materials.

Sofern das elektrisch isolierende Material zwischen dem ersten Messwandler und dem ersten Temperaturfühler angeordnet ist, so darf das elektrisch isolierende Material nicht zu dick ausgebildet sein, da die aktuell vorliegende Temperatur des ersten Messwandlers stets von dem auf dem Träger angeordneten zugehörigen Temperaturfühler ermittelbar sein muss. Die Wärmeleitfähigkeit des elektrisch isolierenden Materials ist somit vorzugsweise derart ausgebildet, dass seitens der Temperaturmesseinheit die Temperatur des Messwandlers derart erfassbar ist, dass eine anstehende Überlast am Verbraucher ermittelbar ist.

In einer weiteren vorteilhaften Ausführungsform der Erfindung hält das zusätzliche elektrisch isolierende Material eine Temperatur von 500°C für mindestens zehn Millisekunden und eine Temperatur von 300°C für mindestens eine Minute ohne mechanische Beschädigung aus.

Vorzugsweise wird der Träger durch das elektrisch isolierende Material bezüglich dieser Temperaturen derart abgeschirmt, dass es seitens des Trägers zu keiner mechanischen Beschädigung kommt.

Bei einem Kurzschluss in einer Strombahn können für einige Millisekunden maximal Temperaturen von bis zu 500°C entstehen. Diese Höchsttemperatur kühl sich, in den ersten 10 bis 20 Millisekunden, rasch ab. Danach klingt die Temperatur bei einem Level von ca. 200 bis 250°C langsam für einige Minuten ab. Bei einem Überlastfall können für einige Sekunden Temperatur von bis zu 300°C vorliegen. Auch diese Temperaturen klingen für einige Minuten langsam ab.

Das elektrisch isolierende Material muss diese Höchsttemperatur ohne Beschädigung widerstehen und den Träger vor den Höchsttemperaturen schützen. Sofern das elektrisch isolierende Material zwischen dem Temperaturfühler und dem Messwandler angeordnet ist, so muss das elektrisch isolierende Material den plötzlichen Wärmeanstieg des Messwandlers an den zugeordneten Temperaturfühler weiterreichen, so dass seitens der Auswerteeinheit eine Ermittlung der Überlast erfolgen kann.

Das elektrisch isolierende Material ist somit vorzugsweise derart ausgebildet, dass es die durch einen Kurzschluss oder einen Überlastfall auftretenden Temperaturen ohne mechanische Beschädigung widersteht und ferner eine derartige Wärmeleitfähigkeit aufweist, dass zum einen der Träger vor einer mechanischen Beschädigung durch bei einem Kurzschluss oder einem Überlastfall am Messwandler auftretende Temperaturen geschützt ist und dennoch für die Temperaturmesseinheit ein Erfassen der Temperatur des Messwandlers ermöglicht wird, so dass die Auswerteeinheit mittels der erfassten Temperaturen der Temperaturmesseinheit eine Überlast am Verbraucher ermitteln kann. Die Einstellung dieser Parameter erfolgt insbesondere über die Wahl des elektrisch isolierenden Materials selbst sowie dessen Dicke zwischen dem Messwandler und dem Träger bzw. dem Temperaturfühler.

Das zusätzliche elektrisch isolierende Material ist vorzugsweise mechanisch stabil ausgebildet.

Das zusätzlich elektrisch isolierendes Material ist beispielsweise:
- Glimmer,
- eine Glasschicht,
- ein mit Polytetrafluorethylen beschichtetes Glasgewebe,
- ein hitzebeständiger Lack,
- eine Silikonfolie,
- ein Silikonklebeband,
- aus Polytetrafluorethylen,
- eine Folie aus Polytetrafluorethylen,
- eine mit Polytetrafluorethylen beschichtete Folie,
- ein mit Polytetrafluorethylen beschichtetes Gewebeband,
- ein Sinterkunststoff aus Polytetrafluorethylen,
- ein Keramikkleber,
- aus Silikon-Kautschuk, Polyvinylidenfluorid, Polyimid, Polyamid, Polypropylen, Polycarbonat oder Polyether-Etherketon (z.B. als Folie oder als Band)
- eine Keramik.

Es ist ebenso denkbar, dass die genannten Materialien miteinander kombiniert werden.

In einer weiteren vorteilhaften Ausführungsform der Erfindung kann die Auswerteeinheit mittels erfassten Temperaturen der ersten Temperaturmesseinheit ein zeitliches Erwärmungsverhalten des ersten Messwandlers ermitteln. Durch eine Auswertung des ermittelten zeitlichen Erwärmungsverhaltens des ersten Messwandlers kann die Auswerteeinheit eine anstehende Überlast am Verbraucher ermitteln.

In einer weiteren vorteilhaften Ausführungsform der Erfindung kann die Auswerteeinheit anhand eines Vergleichs des ermittelten Erwärmungsverhaltens des ersten Messwandlers mit einem in der Auswerteeinheit hinterlegten Referenzwert eine anstehende Überlast am Verbraucher ermitteln.

Die erste Temperaturmesseinheit ist dazu ausgebildet der Auswerteeinheit Temperaturen zu übermitteln, so dass die Auswerteeinheit ein Erwärmungsverhalten des ersten Messwandlers ermitteln kann. Da in der Auswerteeinheit ein Referenzwert hinterlegt ist, kann durch einen Vergleich des ermittelten vorliegenden Erwärmungsverhaltens mit dem Referenzwert ein Rückschluss auf den vorliegenden Betriebszustand des Verbrauchers gewonnen werden (Auswertung). Steht eine Überlast an, so liegt im Vergleich zum Nennbetrieb ein erhöhter Stromfluss und somit eine erhöhte Temperatur vor. Die erhöhte Temperatur führt zu einem charakteristischen Erwärmungsverhalten des ersten Messwandlers, welche durch einen Abgleich mit dem hinterlegten Referenzwert erkannt werden kann.

Durch den Referenzwert wird insbesondere das Erwärmungsverhalten des ersten Messwandlers in Abhängigkeit des Stromflusses durch den ersten Messwandler über die Zeit charakterisiert, so dass eine Überlast am Verbraucher erkannt werden kann. Durch einen Vergleich des ermittelten Erwärmungsverhaltens des ersten Messwandlers mit dem Referenzwert kann somit zwischen einem durch den Nennbetrieb bedingten Erwärmungsverhalten und einem durch eine anstehende Überlast bedingten Erwärmungsverhalten des ersten Messwandlers unterschieden werden.

In einer weiteren vorteilhaften Ausführungsform der Erfindung kann die Auswerteeinheit bei einer ermittelten anstehenden Überlast am Verbraucher ein Warnsignal, insbesondere ein elektrisches Warnsignal, ausgeben.

Durch die Ausgabe des elektrischen Warnsignals wird insbesondere der Stromfluss auf der Strombahn unterbunden. Durch das Warnsignal ist insbesondere eine Schaltstellung eines Schaltelements der Vorrichtung steuerbar. Durch das Schaltelement wird entweder ein Hilfsstromkreis oder ein Hauptstromkreis (Zuleitung der Energieversorgung des elektrischen Verbrauchers) direkt gesteuert.

Steuert das Schaltelement den Hilfsstromkreis, so wird das Schalelement geöffnet oder geschlossen, so dass ein den Hauptstromkreis schaltendes Schaltgerät (z.B. Schütz) angesteuert wird. Dieses den Hauptstromkreis schaltende Schaltgerät öffnet daraufhin den Hauptstromkreis, so dass der Stromfluss zum Verbraucher unterbrochen wird und somit die Überlast am Verbraucher vermieden wird.

Steuert das Schaltelement den Hauptstromkreis, so wird das Schalelement geöffnet, so dass der Stromfluss zum Verbraucher unterbrochen wird und somit die Überlast am Verbraucher vermieden wird.

Liegt ein mehrphasiger Verbraucher vor, so werden vorzugsweise durch eine Ermittlung einer anstehenden Überlast an lediglich einer Strombahn der Vorrichtung (und somit an lediglich einer Phase des Verbrauchers) alle Phasen des Verbrauchers durch die Vorrichtung geöffnet, so dass der Stromfluss zum Verbraucher unterbunden wird.

In einer weiteren vorteilhaften Ausführungsform der Erfindung umfasst die erste Temperaturmesseinheit ferner einen zweiten Temperaturfühler, wobei der zweite Temperaturfühler eine Referenztemperatur erfassen kann, wobei die Auswerteeinheit eine anstehende Überlast am Verbraucher mittels erfassten Temperaturen des ersten und zweiten Temperaturfühlers ermitteln kann.

Mittels des ersten und zweiten Temperaturfühlers kann insbesondere das Erwärmungsverhalten des ersten Messwandlers ermittelt und ausgewertet werden.

Die Referenztemperatur kann z.B. dezentral zum ersten Messwandler innerhalb der Vorrichtung ermittelt werden; d.h. die Temperatur des ersten Messwandlers wird nicht durch den zweiten Temperaturfühler erfasst. Die Auswerteeinheit kann somit das Erwärmungsverhalten des ersten Messwandlers mittels erfasster Temperaturen des ersten Messwandlers und Referenztemperaturen ermitteln und auswerten kann.

Es ist jedoch ebenso denkbar, dass als Referenztemperatur eine Temperatur an einer Temperaturmessstelle des ersten Messwandlers erfasst wird, welche nicht durch den ersten Temperaturfühler erfasst wird. Ist die Referenztemperatur des zweiten Temperaturfühlers eine Temperatur des ersten Messwandlers, so ist der zweite Temperaturfühler derart auf dem Träger angeordnet, dass er eine Temperatur des ersten Messwandlers erfassen kann. Hierfür ist er vorzugsweise auf der zweiten Seitenfläche des Trägers angeordnet.

Durch einen Abgleich einer erfassten Temperatur des ersten Messwandlers mit einer vorzugsweise zeitgleich erfassten Referenztemperatur in der Auswerteinheit können externe Temperatureinflüsse als Fehlerursache weitestgehend ausgeschlossen werden. Durch die Auswerteeinheit kann somit ein ausschließlich strombedingtes, eine Überlast am Verbraucher charakterisierendes Erwärmungsverhalten des ersten Messwandlers ermittelt werden.

Bei einer anstehenden Überlast des Verbrauchers liegt gegenüber dem Nennbetrieb des Verbrauchers am ersten Messwandler ein erhöhter Stromfluss und somit eine erhöhte Temperatur vor. Der erste Temperaturfühler detektiert somit eine strombedingte erhöhte Temperatur. Durch den zweiten Temperaturfühler wird als Referenztemperatur z.B. eine Temperatur in der Vorrichtung ermittelt, so dass durch einen Vergleich der Temperatur des ersten Temperaturfühlers mit der Referenztemperatur des zweiten Temperaturfühlers das strombedingte Erwärmungsverhalten des ersten Messwandlers ermittelt werden kann. Auf diese Weise kann ausgeschlossen werden, dass es sich bei dem ermittelten Erwärmungsverhalten des ersten Messwandlers nicht um einen Erwärmung des ersten Messwandlers durch einen Anstieg der Umgebungstemperatur bei der Vorrichtung handelt sondern um eine strombedingte Erwärmung am ersten Messwandler.

Die Erfassung der Temperatur mit dem ersten und zweiten Temperaturfühler erfolgt vorzugsweise zeitgleich.

Der erste Messwandler weist vorzugsweise bei Nennbetrieb des Verbrauchers eine Temperatur von ca. 60-100°C auf. Bei einer maximalen Überlast am Verbraucher kann hingegen am ersten Messwandler eine Temperatur von ca. 500°C vorliegen.

In einer weiteren vorteilhaften Ausführungsform der Erfindung umfasst die erste Temperaturmesseinheit einen dritten Temperaturfühler, wobei der zweite und dritte Temperaturfühler auf der zweiten Seitenfläche des Trägers angeordnet ist, wobei der erste, zweite und dritte Temperaturfühler der ersten Temperaturmesseinheit gleichzeitig jeweils eine Temperatur des ersten Messwandlers erfassen kann, wobei die Auswerteeinheit anhand der erfassten Temperaturen der ersten Temperaturmesseinheit eine anstehende Überlast am Verbraucher ermitteln kann.

In einer weiteren vorteilhaften Ausführungsform der Erfindung umfasst die erste Temperaturmesseinheit einen zweiten und dritten Temperaturfühler, wobei der erste, zweite und dritte Temperaturfühler derart zum ersten Messwandler angeordnet ist, dass der erste Temperaturfühler eine Temperatur an einem ersten Messpunkt des ersten Messwandlers, der zweite Temperaturfühler eine Temperatur an einem zweiten Messpunkt des ersten Messwandlers und der dritte Temperaturfühler eine Temperatur an einem dritten Messpunkt des ersten Messwandlers erfassen kann, wobei in Bezug zu einer ersten Seitenfläche des ersten Messwandlers der zweite Messpunkt zwischen dem ersten und dritten Messpunkt auf der ersten Seitenfläche des Messwandlers liegt.

In Bezug zu der zweiten Seitenfläche des Trägers ist der zweite Temperaturfühler zwischen dem ersten und dritten Temperaturfühler angeordnet.

Vorzugsweise liegt die erste Seitenfläche des Messwandlers der ersten Seitenfläche des Trägers parallel gegenüber.

Vorzugsweise ist lediglich das zusätzliche elektrisch isolierende Material zwischen der ersten Seitenfläche des ersten Messwandlers und der ersten Seitenfläche des Trägers angeordnet.

In einer weiteren vorteilhaften Ausführungsform der Erfindung ist der erste, zweite und/oder dritte Temperaturfühler maximal 2 mm von dem ersten Messwandler beabstandet.

In einer weiteren vorteilhaften Ausführungsform der Erfindung ist die Überwachungseinrichtung derart ausgebildet, dass zur zeitlichen Ermittlung des Erwärmungsverhaltens des ersten Messwandlers mindestens zweimal die Temperatur durch den ersten Temperaturfühler erfasst wird. Sofern durch die Vorrichtung zusätzlich die Referenztemperatur erfasst wird (der zweite Temperaturfühler liegt vor), so wird zur Ermittlung des Erwärmungsverhaltens des ersten Messwandlers, vorzugsweise mindestens zweimal, zeitgleich die Temperatur des ersten Messwandlers und die Referenztemperatur erfasst. Sofern der dritte Temperaturfühler vorliegt, so wird zur Ermittlung des Erwärmungsverhaltens des ersten Messwandlers, vorzugsweise mindestens zweimal, zeitgleich die Temperatur am ersten, zweiten und dritten Temperaturfühler erfasst.

In einer weiteren vorteilhaften Ausführungsform der Erfindung ist die Überwachungseinrichtung derart ausgebildet, dass zur Ermittlung des Erwärmungsverhaltens des ersten Messwandlers die Temperatur des ersten Messwandlers wiederholt in einem fest definierten Zeitintervall erfasst und anschließend ausgewertet wird.

In einer weiteren vorteilhaften Ausführungsform der Erfindung umfasst die Vorrichtung ferner eine zweite Strombahn, welche eine erste und eine zweite Leitung umfasst, wobei die Überwachungseinrichtung ferner eine zweite Temperaturmesseinheit und einen zweiten Messwandler, welcher eine elektrisch leitende Verbindung zwischen der ersten und der zweiten Leitung der zweiten Strombahn herstellt, umfasst, wobei die zweite Temperaturmesseinheit von dem zweiten Messwandler galvanisch getrennt ist und einen ersten Temperaturfühler umfasst, wobei auf der ersten Seitenfläche des Trägers das elektrisch isolierende Material zwischen dem zweiten Messwandler und dem Träger angeordnet ist und der erste Temperaturfühler der zweiten Temperaturmesseinheit auf dem Träger derart angeordnet ist, dass er eine Temperatur des zweiten Messwandlers erfassen kann, wobei die Auswerteeinheit eine anstehende Überlast am Verbraucher mittels erfassten Temperaturen des ersten Temperaturfühlers der zweiten Temperaturmesseinheit ermitteln kann.

Die Ermittlung des Erwärmungsverhaltens des zweiten Messwandlers durch die Auswerteeinheit erfolgt insbesondere durch eine Analyse der erfassten Temperatur des zweiten Messwandlers über die Zeit. Hierbei wird vorzugsweise zusätzlich zur erfassten Temperatur des ersten Temperaturfühlers, insbesondere zeitgleich, eine Referenztemperatur (z.B. die erfasste Temperatur eines Temperaturfühlers der ersten Temperaturmesseinheit) ermittelt und analysiert. Auf diese Weise bleibt eine "nicht strombedingte" Erwärmung am Messwandler (z.B. durch die Umgebungstemperatur) unberücksichtigt. Durch eine Auswertung des ermittelten Erwärmungsverhaltens kann eine anstehende Überlast am Verbraucher erkannt werden.

Das zusätzliche elektrisch isolierende Material ist vorzugsweise unmittelbar zwischen dem zweiten Messwandler und dem Träger angeordnet.

Vorzugsweise ist der erste Temperaturfühler der zweiten Temperaturmesseinheit auf der zweiten Seitenfläche des Trägers angeordnet.

In einer weiteren vorteilhaften Ausführungsform der Erfindung umfasst die Vorrichtung eine dritte Strombahn, welche eine erste und eine zweite Leitung umfasst, wobei die Überwachungseinrichtung ferner eine dritte Temperaturmesseinheit und einen dritten Messwandler, welcher eine elektrisch leitende Verbindung zwischen der ersten und der zweiten Leitung der dritten Strombahn herstellt, umfasst, wobei die dritte Temperaturmesseinheit von dem dritten Messwandler galvanisch getrennt ist und einen ersten Temperaturfühler umfasst, wobei auf der ersten Seitenfläche des Trägers das zusätzliche elektrisch isolierende Material zwischen dem dritten Messwandler und dem Träger angeordnet ist und der erste Temperaturfühler der dritten Temperaturmesseinheit auf dem Träger derart angeordnet ist, dass er eine Temperatur des dritten Messwandlers erfassen kann, wobei die Auswerteeinheit eine anstehende Überlast am Verbraucher mittels erfassten Temperaturen des ersten Temperaturfühlers der dritten Temperaturmesseinheit ermitteln kann.

Die Ermittlung des Erwärmungsverhaltens des dritten Messwandlers durch die Auswerteeinheit erfolgt insbesondere durch eine Analyse der Temperatur des dritten Messwandlers über die Zeit. Hierbei wird vorzugsweise zusätzlich zur erfassten Temperatur des ersten Temperaturfühlers, insbesondere zeitgleich, eine Referenztemperatur (z.B. eine erfasste Temperatur durch einen Temperaturfühler der ersten oder zweiten Temperaturmesseinheit) ermittelt und analysiert, so dass eine "nicht strombedingte" Erwärmung des dritten Messwandlers (z.B. durch die Umgebungstemperatur) unberücksichtigt bleibt. Durch eine Auswertung des ermittelten Erwärmungsverhaltens kann eine anstehende Überlast am Verbraucher erkannt werden.

Vorzugsweise ist das zusätzliche elektrisch isolierende Material unmittelbar zwischen dem dritten Messwandler und dem Träger angeordnet.

Der erste Temperaturfühler der dritten Temperaturmesseinheit ist vorzugsweise auf der zweiten Seitenfläche des Trägers angeordnet.

Die zweite und/oder dritte Temperaturmesseinheit kann entsprechend der ersten Temperaturmesseinheit ausgebildet sein, d.h.:
- Es können jeweils zwei oder drei Temperaturfühler je Temperaturmesseinheit vorhanden sein,
- die Temperaturfühler können maximal 2 mm von der entsprechenden Messeinheit beabstandet sein, und/oder
- das elektrisch isolierende Material kann hinsichtlich der/des Temperaturfühler/-s und dem zugehörigen Messwandler entsprechenden angeordnet sein,
- etc..

Es ist ebenso denkbar, dass die erste und/oder zweite und/oder dritte Temperaturmesseinheit weitere Temperaturfühler umfasst, so dass eine genaue Ermittlung des Erwärmungsverhaltens am zugehörigen Messwandler erfolgen kann.

Die zwei Leitungen der jeweiligen Strombahn (erste, zweite bzw. dritte Strombahn) werden vorzugsweise lediglich mittels ihres zugehörigen Messwandlers elektrisch leitend verbunden.

In einer weiteren vorteilhaften Ausführungsform der Erfindung ist der jeweilige Temperaturfühler derart ausgebildet, dass er in Abhängigkeit der vorliegenden Temperatur einen charakteristischen elektrischen Zustand einnimmt.

Der Temperaturfühler ist insbesondere ein Thermoelement (z.B. Thermodraht), ein temperaturabhängiger Halbleiter (z.B. Diode, Kaltleiter) oder ein Widerstandsthermometer (z.B. PT100, PT1000).

Wird beispielsweise eine Diode als Temperaturfühler verwendet, so kann anhand einer Messung der Spannung an der Diode ein Rückschluss auf die vorliegende Temperatur gewonnen werden. Eine Temperaturänderung des Messwandlers würde folglich zu einer Temperaturänderung an der Diode führen, welche zu einer Spannungsänderung führt.

In einer weiteren vorteilhaften Ausführungsform der Erfindung ist der erste Messwandler und sofern vorhanden zweite und/oder dritte Messwandler jeweils ein elektrischer Widerstand mit temperaturunabhängigen Eigenschaften.

Vorzugsweise weist der Messwandler eine konstante Verlustleistung und eine charakteristische Erwärmungskurve auf. Der Messwandler ist vorzugsweise ein Shunt.

Der Auswerteeinheit liegt vorzugsweise ein Teil der Erwärmungskurve des jeweiligen Messwandlers als Referenzwert vor, so dass sie durch einen Abgleich des ermittelten Erwärmungsverhaltens mit dem Referenzwert eine anstehende Überlast erkennen kann. Es erfolgt somit eine Auswertung des ermittelten Erwärmungsverhaltens. Bei dem Abgleich mit dem Referenzwert wird insbesondere das Erwärmungsverhalten des jeweiligen Messwandlers während eines definiertes Zeitintervalls betrachtet. Es werden somit die ermittelten Temperaturen des jeweiligen Messwandlers während eines definiertes Zeitintervall analysiert. Sind die Messwandler und die zugehörigen Temperaturfühler der Temperaturmesseinheit gleich ausgebildet, so kann der Referenzwert für die Messwandler gleich ausgebildet sein.

In einer weiteren vorteilhaften Ausführungsform der Erfindung ist die Vorrichtung ein Schaltgerät, insbesondere ein Überlastrelais oder ein Leistungsschalter (z.B. Motorschutzschalter, Anlagenschutzschalter).

Durch den ersten, zweiten und/oder dritten Temperaturfühler kann vorzugsweise eine Temperaturdifferenz von mindestens 15 Kelvin durch die Auswerteeinheit ermittelt werden.

Die Vorrichtung ist insbesondere dezentral vom Verbraucher angeordnet, d.h. sie ist kein Bestandteil des Verbrauchers (z.B. Elektromotor).

In einer weitern vorteilhaften Ausführungsform der Erfindung ist die Durchschlagfestigkeit des zusätzlichen elektrisch isolierenden Materials größer als die des Materials des Trägers. Vorzugsweise weist die parallel zum Messwandler angeordnete Schicht des zusätzlichen elektrisch isolierenden Materials eine größere Durchschlagfestigkeit auf als die parallel zum Messwandler angeordnete Schicht des Trägers.

In einer weiteren vorteilhaften Ausführungsform der Erfindung umfasst der Messwandler das Material Kohlenstoff, insbesondere Graphit.

Im Folgenden werden die Erfindung und Ausgestaltungen der Erfindung anhand der in den Figuren dargestellten Ausführungsbeispiele näher beschrieben und erläutert. Es zeigen:
- FIG 1: eine schematische Darstellung einer ersten Strombahn einer Vorrichtung zum Schutz eines elektrischen Verbrauchers,
- FIG 2: eine schematische Darstellung einer Vorrichtung zum Schutz eines elektrischen Verbrauchers,
- FIG 3: eine schematische Darstellung einer alternativen Ausgestaltung einer Vorrichtung zum Schutz eines elektrischen Verbrauchers, und
- FIG 4: eine schematische Darstellung einer Ausführungsform eines Trägers der in FIG 3 gezeigten Vorrichtung zum Schutz des elektrischen Verbrauchers.

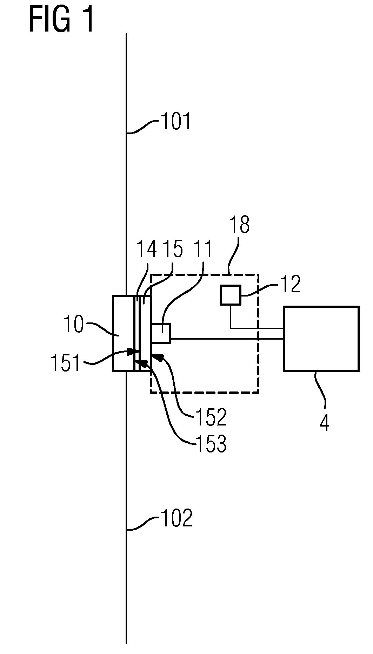

FIG 1 zeigt eine schematische Darstellung einer ersten Strombahn einer Vorrichtung zum Schutz eines elektrischen Verbrauchers. Die abgebildete Strombahn ist Bestandteil der Vorrichtung zum Schutz eines nachgeschalteten Verbrauchers. Die dargestellte Strombahn umfasst eine Überwachungseinrichtung, mittels welcher eine anstehende Überlast des Verbrauchers ermittelt werden kann. Hierfür wird die Vorrichtung in den Strompfad des Verbrauchers integriert. Ist beispielsweise der Verbraucher ein dreiphasiger Drehstrommotor, so weist mindestens eine Zuleitung (Phase) des Drehstrommotors die abgebildete Strombahn und Überwachungseinrichtung auf.

Die erste Strombahn umfasst eine erste Leitung 101 und eine zweite Leitung 102. Die Überwachungseinrichtung umfasst eine erste Temperaturmesseinheit 18, einen Träger 15, ein elektrisch isolierendes Material 14, eine Auswerteeinheit 4 und einen ersten Messwandler 10. Die erste Temperaturmesseinheit 18 umfasst einen ersten Temperaturfühler 11 und einen zweiten Temperaturfühler 12, wobei mit dem ersten Temperaturfühler 11 die Temperatur des ersten Messwandlers 10 erfasst werden kann und mit dem zweiten Temperaturfühler 12 eine Referenztemperatur erfasst werden kann. Der zweite Temperaturfühler 12 ist derart platziert, dass in Bezug zum ersten Temperaturfühler 11 ein anderer Messpunkt (andere Temperaturmessstelle) erfasst wird. Hierdurch kann durch ein gleichzeitiges Erfassen der Temperaturen des ersten und zweiten Temperaturfühlers 11,12 eine strombedingte Erwärmung des ersten Messwandlers 10 ermittelt werden. Der erste und zweite Temperaturfühler 11,12 ist jeweils ein Halbleiter, insbesondere eine Diode, so dass über eine Messung deren Spannung ein Rückschluss auf die vorliegende Temperatur am entsprechenden Temperaturfühler 11,12 gewonnen werden kann.

Die ermittelten Temperaturen der ersten und zweiten Temperaturfühler 11,12 werden der Auswerteeinheit 4 bereitgestellt, so dass diese eine strombedingte Erwärmung des ersten Messwandlers 10 ermitteln kann. Die Ermittlung der strombedingten Erwärmung des ersten Messwandlers 10 und somit des strombedingten Erwärmungsverhaltens des ersten Messwandlers 10 erfolgt durch eine Analyse der erfassten Temperaturen der ersten und zweiten Temperaturfühler 11,12 über die Zeit. Mittels der Temperaturfühler 11,12 und der Auswerteeinheit 4 kann eine Erwärmung des ersten Messwandlers 10 von ca. 10 Kelvin im Beriech von -10°C bis 200°C ermittelt werden.

Der erste Messwandler 10 ist zwischen der ersten Leitung 101 und der zweiten Leitung 102 der ersten Strombahn angeordnet, so dass ein Strom von der ersten Leitung 101 lediglich über den ersten Messwandler 10 zur zweiten Leitung 102 fließen kann. Da über die erste Leitung 101 und zweite Leitung 102 die Energieversorgung des nachgeschalteten Verbrauchers erfolgt, fließt während des Betriebs des nachgeschalteten Verbrauchers der Strom über den ersten Messwandler 10. In Abhängigkeit des vorliegenden Betriebszustandes des nachgeschalteten Verbrauchers liegt eine Stromhöhe am ersten Messwandler 10 vor. In Abhängigkeit dieser Stromhöhe und der Stromflusszeit am ersten Messwandler 10 erfolgt eine definierte Erwärmung des ersten Messwandlers 10. Es liegt folglich ein charakteristisches Erwärmungsverhalten am ersten Messwandler 10 vor. Befindet sich der Verbraucher kurz vor einer thermischen Überlast, so liegt eine erhöhte Stromhöhe am ersten Messwandler 10 vor. Durch eine Auswertung des ermittelten Erwärmungsverhaltens des ersten Messwandlers 10 während eines definierten Zeitintervalls durch die Auswerteeinheit 4 kann ein Rückschluss auf den vorliegenden Zustand des nachgeschalteten Verbrauchers erfolgen. Im Nennbetrieb liegt üblicherweise eine Temperatur von ca. 60 bis 100°C am ersten Messwandler 10 vor. Kommt es jedoch zu einer Überlast am Verbraucher, so kann durch den erhöhten Stromfluss eine Temperatur am ersten Messwandler 10 von bis zu 700°C vorliegen. Durch eine Überwachung der Temperatur des ersten Messwandlers 10 kann somit eine anstehende Überlast des Verbrauchers detektiert werden. Die Temperaturmesseinheit 18 umfasst hierfür die beiden Temperaturfühler 11,12.

Der erste Temperaturfühler 11 ist maximal 2 mm von dem ersten Messwandler 10 beabstandet und kann dessen Temperatur erfassen. Der erste Temperaturfühler 11 ist auf einer zweiten Seitenfläche 152 des Trägers 15 (z.B. FR4, Keramik) befestigt. Dem flächig ausgebildeten Träger liegt der zweiten Seitenfläche 152 eine erste Seitenfläche 151 des Trägers 15 parallel gegenüber. Die dem Träger 15 zugewandte Seitenfläche 153 des Messwandlers 10 (erste Seitenfläche 153 des Messwandlers 10) liegt ist parallel zur ersten Seitenfläche 151 des Trägers 15 angeordnet. Zwischen der ersten Seitenfläche 153 des Messwandlers 10 und der ersten Seitenfläche 151 des Trägers 15 ist das zusätzliche elektrisch isolierende Material 14 (z.B. Glimmer, Glasschicht, Hitzebeständiger Lack) unmittelbar zwischen dem ersten Messwandler 10 und dem Träger 15 angeordnet.

Der Bereich der ersten Seitenfläche 151 des Trägers 15, welcher der ersten Seitenfläche 153 des Messwandlers 10 direkt gegenüberliegt, wird durch das elektrisch isolierende Material 14 vollständig bedeckt.

Auf diese Weise wird durch das zusätzlich elektrisch isolierende Material 14 die galvanische Trennung des Messwandlers 10 zum Träger 15 und dem ersten Temperaturfühler 11 sichergestellt. Ferner erfolgt durch das elektrisch isolierende Material 14 ein Schutz des Trägers 15 gegenüber den hohen Temperaturen des ersten Messwandlers 10, insbesondere bei einem Kurzschluss oder einem Überlastfall des Verbrauchers.

Das elektrisch isolierende Material 14 ist insbesondere hitzebeständig und formstabil ausgebildet und bietet auch bei hohen Temperaturen eine hohe Durchschlagfestigkeit, so dass es zu keiner Beschädigung des Trägers 15 und ersten Temperaturfühlers 11 kommt.

Der erste Temperaturfühler 11 erfasst die Temperatur des ersten Messwandlers 10, der zweite Temperaturfühler 12 erfasst zeitgleich eine Referenztemperatur innerhalb der Vorrichtung, so dass die Auswerteeinheit 4 anhand der erfassten Temperaturen (Temperaturen des ersten Messwandlers 10 und Referenztemperaturen) ein strombedingtes Erwärmungsverhalten des ersten Messwandlers 10 ermitteln kann. Der erste und zweite Temperaturfühler 11,12 ist in diesem Ausführungsbeispiel räumlich getrennt (größer 0,05 mm) vom ersten Messwandler 10 platziert. Ferner ist der zweite Temperaturfühler 12 mindestens 4 mm vom ersten Temperaturfühler 11 entfernt, so dass ein strombedingtes Erwärmungsverhalten des ersten Messwandlers 10 durch die Auswerteeinheit 4 berechnet werden kann. Es ist jedoch ebenso denkbar, dass der zweite Temperaturfühler 12 die Temperatur des ersten Messwandlers 10 in Bezug zum ersten Temperaturfühler 11 an einem anderen Messpunkt des ersten Messwandlers 10 erfasst, so dass ein Erwärmungsverhalten des ersten Messwandlers 10 ermittelbar ist.

Der erste Messwandler 10 ist ein metallischer elektrischer Widerstand (Shunt), welcher eine charakteristische Erwärmungskurve aufweist. Es ist ebenso ein keramischer Widerstand denkbar, welcher eine charakteristische Erwärmungskurve aufweist. Der Auswerteeinheit 4 liegt das charakteristische Erwärmungsverhalten des ersten Messwandlers 10 als Referenzwert vor, so dass sie anhand eines Vergleichs des ermittelten vorliegenden Erwärmungsverhaltens des ersten Messwandlers 10, insbesondere während eines definierten Zeitintervalls, mit dem Referenzwert einen Rückschluss auf den vorliegenden Auslastungszustand des Verbrauchers gewinnen kann. Die Auswerteeinheit 4 kann folglich fortlaufend einen die Stromhöhe und Stromflusszeit charakterisierenden Wert des ersten Messwandlers 10 überwachen, so dass anhand des vorliegenden Erwärmungsverhaltens des ersten Messwandlers 10 und somit anhand dessen thermischen Zustandes ein Motor bzw. Leitungsschutz abgeleitet werden kann. Es kann somit ermitteln werden, ob eine Überlast am nachgeschalteten Verbraucher ansteht oder nicht.

Die Temperaturfühler 11,12 können die Temperatur mit einer hohen Auflösung, beispielsweise kleiner 1 Kelvin, messen. Auf diese Weise kann mit geringen Temperaturunterschieden und somit mit geringen elektrischen Widerstandswerten des erstens Messwandlers 10 gearbeitet werden. Hierdurch kann der Messbereich hinsichtlich der Stromuntergrenze erheblich nach unten vergrößert werden, so dass der Einstellbereich beispielsweise gegenüber der Bimetalllösung erheblich erweitert werden kann. Ein typischer Wert für die notwendige Temperatur bei Bimetalllösungen ist beispielsweise 50 Kelvin Übertemperatur. Bei einer Lösung mittels des ersten Messwandlers 10 reichen währenddessen Erwärmungen von unter 10 Kelvin aus. Auf diese Weise lassen sich Einstellbereiche bis 1 zu 4 realisieren.

Die Auswertung des strombedingten Erwärmungsverhaltens des ersten Messwandlers 10 über dessen Temperatur ist weitgehend frequenzunabhängig und somit für AC- und DC-Anwendungen tauglich.

In der FIG 1 wird lediglich eine Phase durch die Überwachungseinrichtung überwacht. Es ist jedoch ebenso denkbar, dass bei mehrphasigen Verbrauchern jede Phase oder zumindest zwei Phasen jeweils eine derartige Temperaturmesseinheit umfasst/-en.

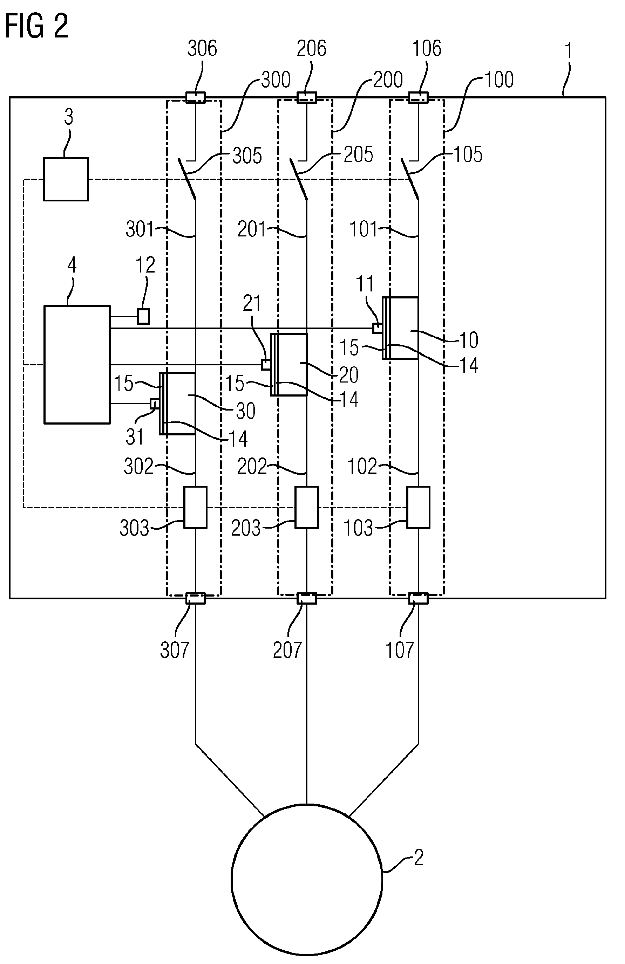

FIG 2 zeigt eine schematische Darstellung einer Vorrichtung 1 zum Schutz eines elektrischen Verbrauchers 2. Die Vorrichtung 1 ist in diesem Ausführungsbeispiel ein Leistungsschalter 1, mit welchem ein Verbraucher 2, nämlich ein dreiphasiger elektrischer Motor 2, überwacht werden kann. Der Leistungsschalter 1 ist hierfür in den Versorgungsstrang des Verbrauchers 2 zwischengeschaltet, so dass mittels des Leistungsschalters 1 die drei Phasen des Verbrauchers 2 überwacht werden können.

Damit der Leistungsschalter 1 in den Versorgungsstrang des elektrischen Verbrauchers 2 integriert werden kann, weist er eingangsseitige Anschlussvorrichtungen 106,206,306 und ausgangsseitige Anschlussvorrichtungen 107,207,307 auf. In dem Leistungsschalter 1 werden somit die einzelnen Phasen des Verbrauchers 2 galvanisch getrennt geführt. Über die erste Strombahn 100 wird die erste Phase abgebildet, über die zweite Strombahn 200 wird die zweite Phase abgebildet und über die dritte Strombahn 300 wird die dritte Phase des Verbrauchers 2 abgebildet. Die in Figur 1 gezeigt Strombahn entspricht im Wesentlichen der ersten Strombahn 100 der Vorrichtung 1. Über ein Schaltelement 105 der ersten Strombahn 100 kann für die erste Phase der Energiefluss zum Verbraucher 2 unterbrochen werden. Über ein Schaltelement 205 der zweiten Strombahn 200 kann der Energiefluss für die zweite Phase zum Verbraucher 2 unterbrochen werden. Über ein Schaltelement 305 der dritten Strombahn 300 kann für die dritte Phase der Energiefluss zum Verbraucher 2 unterbrochen werden. Die Ansteuerung der Schaltelemente 105,205,305 erfolgt über ein Schaltschloss 3.

Das Schaltschloss 3 ist mit der Auswerteeinheit 4 sowie mit dem Kurzschlussauslöser 103 der ersten Strombahn 100, dem Kurzschlussauslöser 203 der zweiten Strombahn 200 und dem Kurzschlussauslöser 303 der dritten Strombahn 300 verbunden.

Mittels der Kurzschlussauslöser 103,203,303 der jeweiligen Strombahnen 100,200,300 kann ein auftretender Kurzschluss in den einzelnen Strombahnen und somit in den einzelnen Phasen des Verbrauchers 2 detektiert werden, so dass bei einer Detektion eines Kurzschlusses die Energiezufuhr zum Verbraucher 2 unterbunden werden kann. Hierfür wird von den Kurzschlussauslösern 103,203,303 ein entsprechendes Signal an das Schaltschloss 3 ausgegeben, so dass dieses die Schaltelemente 105,205,305 öffnen kann.

Ferner weist der Leistungsschalter eine Überwachungsvorrichtung auf, mit welcher eine anstehende Überlast des elektrischen Verbrauchers 2 detektiert werden kann. Die erste Strombahn 100 umfasst hierfür, wie bereits in FIG 1 gezeigt, eine erste Leitung 101 und eine zweite Leitung 102. Zwischen der ersten Leitung 101 und der zweiten Leitung 102 ist ein erster Messwandler 10 angeordnet, welcher eine elektrische Verbindung zwischen den beiden Leitungen 101 und 102 herstellt. Der erste Messwandler 10 ist ein metallischer, elektrischer Widerstand mit temperaturunabhängigen Eigenschaften. In Abhängigkeit der vorliegenden Stromhöhe und Stromflusszeit in der ersten Strombahn 100 liegt eine definierte Erwärmung des ersten Messwandlers 10 vor.

Die Temperatur des ersten Messwandlers 10 kann mittels eines ersten Temperaturfühlers 11 der ersten Temperaturmesseinheit erfasst werden. Die erfasste Temperatur am ersten Temperaturfühler 11 der ersten Temperaturmesseinheit wird der Auswerteeinheit 4 bereitgestellt. Der erste Temperaturfühler 11 der ersten Temperaturmesseinheit ist galvanisch von dem ersten Messwandler 10 getrennt.

Auf dem Träger 15 ist der erste Temperaturfühler 11 der ersten Temperaturmesseinheit befestigt. Zwischen dem Träger 15 und dem ersten Messwandler 10 ist eine zusätzliche elektrisch isolierende Schicht 14 angebracht. Diese elektrisch isolierende Schicht 14 stellt zum einen die galvanische Trennung des ersten Messwandlers 10 vom Träger 15 und dem ersten Temperaturfühler 11 der ersten Temperaturmesseinheit her. Ferner wird durch die elektrisch isolierende Schicht 14 der Träger 15 vor einer thermischen Beschädigung durch den ersten Messwandler 10 geschützt.

Die erste Temperaturmesseinheit umfasst ferner einen zweiten Temperaturfühler 12, welcher eine Referenztemperatur innerhalb des Leistungsschalters 1 misst. Dessen erfasste Temperatur wird der Auswerteeinheit 4 ebenso zur Verfügung gestellt. Der erste Temperaturfühler 11 erfasst die Temperatur an einem anderen Messpunkt als der zweite Temperaturfühler 12, so dass im aktiven Betrieb des Verbrauchers 2 eine strombedingte Erwärmung des ersten Messwandlers 10 durch zeitgleiche Erfassungen der Temperaturen des ersten und zweiten Temperaturfühlers 11,12 ermittelt werden kann. Durch einen Vergleich der Temperaturen des ersten Temperaturfühlers 11 und des zweiten Temperaturfühlers 12 der ersten Temperaturmesseinheit kann die Auswerteeinheit 4 ein charakteristisches Erwärmungsverhalten am ersten Messwandler 10 ermitteln und auswerten.

Die Energieversorgung der zweiten Phase des Verbrauchers 2 wird über die zweite Strombahn 200 geführt. Die zweite Strombahn 200 weist ebenso eine erste Leitung 201 und eine zweite Leitung 202 auf. Zwischen der ersten und zweiten Leitung 201,202 ist ein zweiter Messwandler 20 angeordnet, welcher die elektrische Verbindung zwischen der ersten Leitung 201 und der zweiten Leitung 202 sicherstellt. Der zweite Messwandler 20 ist ebenso wie der erste Messwandler 10 der ersten Strombahn 100 ein definierter Widerstand, welcher in Abhängigkeit des vorliegenden Stromflusses und der vorliegenden Stromflusszeit einen charakteristischen thermischen Zustand einnimmt. Die Temperatur des zweiten Messwandlers 20 kann mittels eines ersten Temperaturfühlers 21 der zweiten Temperaturmesseinheit ermittelt werden. Der erste Temperaturfühler 21 der zweiten Temperaturmesseinheit ist galvanisch von dem zweiten Messwandler 20 getrennt. Durch einen Abgleich der erfassten Temperaturen des zweiten Temperaturfühlers 12 der ersten Temperaturmesseinheit mit den erfassten Temperaturen des ersten Temperaturfühlers 21 der zweiten Temperaturmesseinheit kann die Auswerteeinheit 4 die vorliegende Erwärmung am zweiten Messwandler 20 ermitteln. Es kann somit das Erwärmungsverhalten am zweiten Messwandler 20 analysiert werden.

Auf dem Träger 15 ist der erste Temperaturfühler 21 der zweiten Temperaturmesseinheit befestigt. Zwischen dem Träger 15 und dem zweiten Messwandler 20 ist die zusätzliche elektrisch isolierende Schicht 14 angebracht. Diese elektrisch isolierende Schicht 14 stellt zum einen die galvanische Trennung des zweiten Messwandlers 20 vom Träger 15 und dem ersten Temperaturfühler 11 der zweiten Temperaturmesseinheit her. Ferner wird durch die elektrisch isolierende Schicht 14 der Träger 15 vor einer thermischen Beschädigung durch den zweiten Messwandler 20 geschützt.

Die Energieversorgung der dritten Phase des Verbrauchers 2 wird über die dritte Strombahn 300 geführt, so dass ebenso die dritte Phase auf Überlast überwacht werden kann. Die dritte Strombahn 300 weist eine erste Leitung 301 und eine zweite Leitung 302 auf. Zwischen der ersten und zweiten Leitung 301,302 ist ein dritter Messwandler 30 angeordnet, welches die erste und zweite Leitung 301,302 elektrisch leitend verbindet. Ein über die dritte Strombahn 300 fließender Strom fließt folglich über den dritten Messwandler 30. In Abhängigkeit der Stromhöhe und der Stromflusszeit an der dritten Phase liegt eine charakteristische strombedingte Erwärmung am dritten Messwandler 30 vor. Zur Ermittlung der strombedingten Erwärmung wird die Temperatur des dritten Messwandlers 30 erfasst. Die Temperatur des dritten Messwandlers 30 kann mittels eines ersten Temperaturfühlers 31 einer dritten Temperaturmesseinheit ermittelt werden und der Auswerteeinheit 4 bereitgestellt werden. Der erste Temperaturfühler 31 der dritten Temperaturmesseinheit ist vom dritten Messwandler 30 galvanisch getrennt.

Auf dem Träger 15 ist der erste Temperaturfühler 31 der dritten Temperaturmesseinheit befestigt. Zwischen dem Träger 15 und dem dritten Messwandler 30 ist die zusätzliche elektrisch isolierende Schicht 14 angebracht. Diese elektrisch isolierende Schicht 14 stellt zum einen die galvanische Trennung des dritten Messwandlers 30 vom Träger 15 und dem ersten Temperaturfühler 11 der dritten Temperaturmesseinheit her. Ferner wird durch die elektrisch isolierende Schicht 14 der Träger 15 vor einer thermischen Beschädigung durch den dritten Messwandler 30 geschützt.

Die Temperaturfühler 11,21,33 der einzelnen Strombahnen befinden sich somit auf dem gleichen Träger 15. Der Träger 15 ist in diesem Ausführungsbeispiel eine FR4 Leiterplatte. Die elektrisch isolierende Schicht 14 ist ein separat auf dem Träger 15 aufgebrachter elektrisch isolierender hitzebeständiger Lack. Durch die elektrisch isolierende Schicht 14 wird der Träger 15 galvanisch vom anliegenden Messwandler 10,20,30 getrennt. Ferner wird durch die elektrisch isolierende Schicht 14 eine thermische Beschädigung des Trägers 15 durch die Messwandler 10,20,30 verhindert.

Die einzelnen Strombahnen 100,200,300 weisen folglich jeweils Messwandler 10,20,30 auf, welche in Abhängigkeit der anliegenden Stromhöhe und der Stromflusszeit eine charakteristische strombedingte Erwärmung vollziehen. Anhand einer Überwachung der Temperatur der jeweiligen Messwandler 10,20,30 über die Zeit kann das zeitliche Erwärmungsverhalten der jeweiligen Messwandler 10,20,30 analysiert werden. Durch den zusätzlichen Abgleich mit der Referenztemperatur des zweiten Temperaturfühlers 12 kann die Analyse der ermittelten Temperaturen der Messwandler 10,20,30 auf die strombedingte Erwärmung der Messwandler 10,20,30 reduziert werden.

Es ist ebenso denkbar, dass anstelle der Ermittlung des Erwärmungsverhaltens der jeweiligen Messwandler 10,20,30 mittels eines Abgleichs deren Temperatur mit der erfassten Referenztemperatur des zweiten Temperaturfühlers 12 eine Ermittlung des Erwärmungsverhaltens der jeweiligen Messwandler 10,20,30 ohne der Referenztemperatur durch eine Analyse der erfassten Temperaturen der ersten Temperaturfühler 11,21,31 der jeweiligen Temperaturmesseinheit über die Zeit erfolgt.

Mittels der ermittelten strombedingten Erwärmung der Messwandler 10,20,30 kann folglich ein Rückschluss auf den vorliegenden Stromfluss in der entsprechenden Strombahn und somit ein Rückschluss auf den vorliegenden Betriebszustand des Verbrauchers 2 gewonnen werden, da bei einer anstehenden Überlast ein erhöhter Stromfluss in einzelnen Phasen des Verbrauchers vorliegt.

Der Auswerteeinheit 4 ist die Erwärmungscharakteristik des ersten, zweiten und dritten Messwandlers 10,20,30 bekannt und als Referenzwert hinterlegt. Die Auswerteeinheit 4 kann folglich durch eine Vergleich des strombedingten Erwärmungsverhaltens der einzelnen Messwandler 10,20,30, insbesondere während eines definierten Zeitintervalls, mit dem Referenzwert eine anstehende Überlast des elektrischen Verbrauchers 2 ermittelt und entsprechende Gegenmaßnahmen einleiten. Das Zeitintervall in welchem die Analyse des Erwärmungsverhaltens des jeweiligen Messwandlers 10,20,30 erfolgt, wird vorzugsweise in Abhängigkeit der vorliegenden Temperatur des jeweiligen Messwandlers 10,20,30 gewählt. Bei einer ermittelten anstehenden Überlast des Verbrauchers 2 gibt die Auswerteeinheit 4 ein Warnsignal an das Schaltschloss 3 aus, so dass die Schaltelemente 105,205,305 geöffnet werden und somit der Energiefluss zum Verbraucher 2 unterbunden wird. Auf diese Weise kann eine thermische Beschädigung des Verbrauchers 2 durch eine Überlast vermieden werden.

Dadurch, dass eine thermische Überlast des Verbrauchers 2 durch eine Auswertung des Erwärmungsverhaltens des Messwandlers 10,20,30 ermittelt wird, liegt ebenso ein thermisches Gedächtnis durch den Messwandler 10,20,30 vor, so dass es kurz nach einer thermischen Überlast nicht versehentlich zu einem Zuschalten des Verbrauchers kommen kann. Erst nachdem der Messwandler 10,20,30 eine definierte Abkühlung erfahren hat, kann der Verbraucher 2 erneut an das Versorgungsnetz geschaltet werden, so dass dieser wieder mit Strom versorgt wird. Die Ermittlung der notwendigen Abkühlung des Verbrauchers durch eine Analyse der Temperaturen des Messwandlers 10,20,30 erfolgt ebenso mittels der Temperaturfühler 11,12,21,31 und der Auswerteeinheit 4. Hierfür liegend der Auswerteeinheit 4 ebenso Referenzwerte vor.

Die Vorrichtung 1 zur Überwachung einer thermischen Überlast eines Verbrauchers 2 wurde in FIG 2 beispielhaft anhand eines Leistungsschalters 1 beschrieben. Ebenso kann die Vorrichtung 1 z.B. ein Überlastrelais sein. In diesem Fall wären die Kurzschlussauslöser 103,203 und 303 sowie gegebenenfalls das Schaltschloss 3 und dessen anzusteuernde Schaltelemente 105,205,305 nicht vorhanden.

Die Temperaturfühler 11,12,21,31 sind jeweils Halbleiter, insbesondere Dioden, so dass mittels einer Analyse deren Spannung die Temperatur am Temperaturfühler ermittelt werden kann. Zur Steigerung der Messgenauigkeit können ebenso mehrere Temperaturfühler an den Messwandlern 10,20,30 platziert werden. Ebenso ist es denkbar, dass der zweite Temperaturfühler 12 außerhalb der Vorrichtung 1 platziert ist.

Als Verbraucher 2 kann ebenso eine Leitung gesehen werden, bei welcher ein Schutz vor einer thermischen Überlast sichergestellt werden muss.

Ein großer Vorteil der Vorrichtung 1 und insbesondere der Überwachungseinrichtung besteht darin, dass eine sichere galvanische Trennung zwischen den einzelnen Phasen (Strombahnen 100,200,300) sowie der jeweiligen Temperaturfühler 11,21,31 zu den Strombahnen 100,200,300 ermöglicht wird.

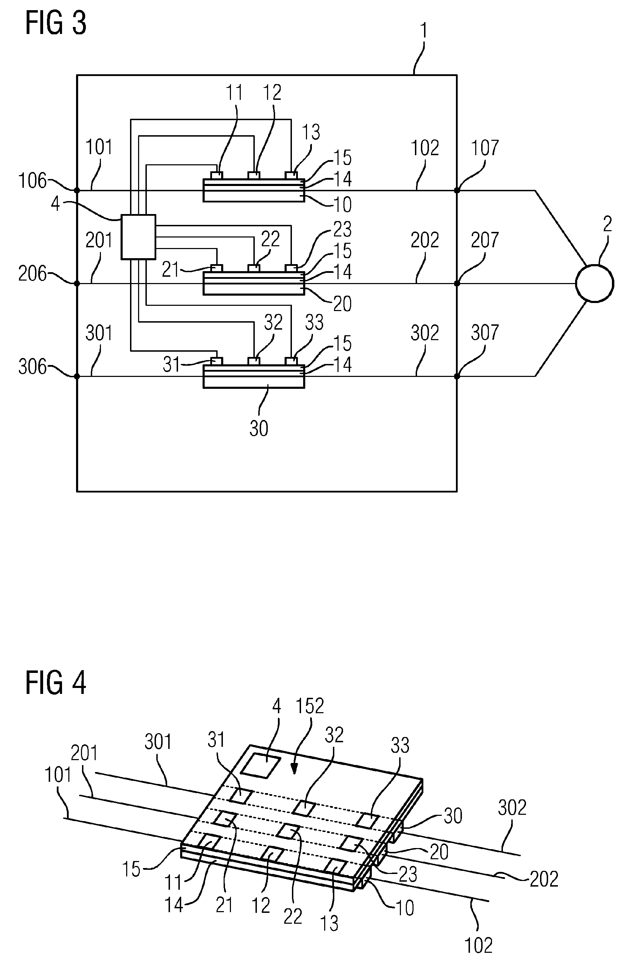

FIG 3 zeigt eine schematische Darstellung einer alternativen Ausgestaltung einer Vorrichtung zum Schutz eines elektrischen Verbrauchers. Die Vorrichtung 1 ist in diesem Ausführungsbeispiel ein Überlastrelais 1, mit welchem ein Verbraucher 2, nämlich ein dreiphasiger elektrischer Motor, überwacht werden kann. Das Überlastrelais 1 ist hierfür in den Versorgungsstrang des Verbrauchers 2 zwischengeschaltet, so dass mittels des Überlastrelais 1 die drei Phasen des Verbrauchers 2 überwacht werden können.

Damit das Überlastrelais 1 in den Versorgungsstrang des elektrischen Verbrauchers 2 integriert werden kann, weist es eingangsseitige Anschlussvorrichtungen 106,206,306 und ausgangsseitige Anschlussvorrichtungen 107,207,307 auf. In dem Überlastrelais 1 werden die einzelnen Phasen des Verbrauchers 2 galvanisch getrennt geführt. Über die erste Strombahn wird die erste Phase, über die zweite Strombahn wird die zweite Phase und über die dritte Strombahn wird die dritte Phase des Verbrauchers 2 geführt.

Das Überlastrelais 1 weist eine Überwachungseinrichtung auf, mit welcher eine anstehende Überlast des elektrischen Verbrauchers 2 detektiert werden kann. ist zwischen einer ersten Leitung 101 und einer zweiten Leitung 102 ein erster Messwandler 10 angeordnet, welcher eine elektrische Verbindung zwischen den beiden Leitungen 101,102 herstellen. Der erste Messwandler 10 ist ein metallischer, elektrischer Widerstand. In Abhängigkeit der vorliegenden Stromhöhe und Stromflusszeit in der ersten Strombahn liegt ein definiertes Erwärmungsverhalten des ersten Messwandlers 10 vor.

Die Temperatur des ersten Messwandlers 10 kann mittels eines ersten, zweiten und dritten Temperaturfühlers 11,12,13 einer ersten Temperaturmesseinheit gleichzeitig erfasst werden. Die gleichzeitig erfasste Temperatur der Temperaturfühler 11,12,13 der ersten Temperaturmesseinheit wird der Auswerteeinheit 4 bereitgestellt.

Die Temperaturfühler 11,12,13 der ersten Temperaturmesseinheit sind auf einem Träger 15 befestigt. Der Träger 15 ist auf der zum ersten Messwandler 10 gewandten Seitenfläche mit einem zum Träger zusätzlichen elektrisch isolierenden Material 14 versehen, so dass hierdurch eine sichere galvanische Trennung des ersten Messwandlers 10 gegenüber dem Träger 15 und den Temperaturfühler 11,12,13 vorliegt. Ferner erfolgt durch das elektrisch isolierende Material 14 eine thermische Abschirmung des Trägers 15 gegenüber den ersten Messwandler 10. Die thermische Abschirmung gewährleistet insbesondere, dass der Träger 15 nicht durch eine durch eine Überlast hervorgerufene Erwärmung des ersten Messwandlers 10 beschädigt wird.

Die Energieversorgung der zweiten Phase des Verbrauchers 2 wird über die zweite Strombahn geführt. Die zweite Strombahn weist eine erste Leitung 201 und eine zweite Leitung 202 auf. Zwischen der ersten und zweiten Leitung 201 und 202 ist ein zweiter Messwandler 20 angeordnet, welcher eine elektrische Verbindung zwischen der ersten Leitung 201 und der zweiten Leitung 202 sicherstellt. Der zweite Messwandler 20 ist ebenso wie der erste Messwandler 10 ein definierter Widerstand, welcher in Abhängigkeit des vorliegenden Stromflusses und der vorliegenden Stromflusszeit einen charakteristischen thermischen Zustand einnimmt. Die Temperaturverteilung am zweiten Messwandler 20 kann mittels einer zweiten Temperaturmesseinheit ermittelt werden. Die zweite Temperaturmesseinheit umfasst hierfür einen ersten, zweiten und dritten Temperaturfühler 21,22,23.

Die Temperatur des zweiten Messwandlers 20 kann mittels des ersten, zweiten und dritten Temperaturfühlers 21,22,23 13 der zweiten Temperaturmesseinheit gleichzeitig erfasst werden. Die gleichzeitig erfasste Temperatur der Temperaturfühler 21,22,23 der zweiten Temperaturmesseinheit wird der Auswerteeinheit 4 bereitgestellt.

Die Temperaturfühler 21,22,23 der zweiten Temperaturmesseinheit sind ebenso auf dem Träger 15 befestigt. Der Träger 15 ist auf der zum zweiten Messwandler 20 gewandten Seitenfläche mit dem elektrisch isolierenden Material 14 versehen, so dass hierdurch eine sichere galvanische Trennung des zweiten Messwandlers 20 gegenüber dem Träger 15 und den Temperaturfühler 21,22,23 der zweiten Temperaturmesseinheit vorliegt. Ferner erfolgt durch das elektrisch isolierende Material 14 eine thermische Abschirmung des Trägers 15 gegenüber den zweiten Messwandler 20. Die thermische Abschirmung gewährleistet insbesondere, dass der Träger 15 nicht durch eine durch eine Überlast hervorgerufene Erwärmung des zweiten Messwandlers 20 beschädigt wird.

Durch eine Abgleich der zeitgleich erfassten Temperaturen der Temperaturfühler 21,22,23 der zweiten Temperaturmesseinheit mit einem in der Auswerteeinheit 4 hinterlegten Referenzwert, welcher eine Anstehende eine Überlast charakterisierendes thermisches Verhalten des zweiten Messwandlers 20 charakterisiert, kann die Auswerteeinheit 4 den vorliegenden strombedingten thermischen Zustand des zweiten Messwandlers 20 ermitteln und somit eine anstehende Überlast am Verbraucher detektieren.

Die Energieversorgung der dritten Phase des Verbrauchers 2 wird über die dritte Strombahn geführt, so dass die dritte Phase auf Überlast überwacht werden kann. Die dritte Strombahn weist eine erste Leitung 301 und eine zweite Leitung 302 auf. Zwischen der ersten und zweiten Leitung 301,302 ist ein dritter Messwandler 30 angeordnet, welches die erste und zweite Leitung 301,302 elektrisch leitend verbindet. Ein über die dritte Strombahn fließender Strom fließt folglich über den dritten Messwandler 30. In Abhängigkeit der Stromhöhe und der Stromflusszeit an der dritten Phase liegt ein charakteristisches strombedingtes Erwärmungsverhalten am dritten Messwandler 30 vor. Zur Ermittlung des strombedingten Erwärmungsverhaltens wird die Temperatur des dritten Messwandlers 30 an drei Messpunkten mittels drei Temperaturfühler 31,32,33 gleichzeitig erfasst. Die erfasste Temperatur wird der Auswerteeinheit 4 zur weiteren Analyse bereitgestellt.

Die Temperaturfühler 31,32,33 der dritten Temperaturmesseinheit sind ebenso auf dem Träger 15 befestigt. Der Träger 15 ist auf der zum dritten Messwandler 20 gewandten Seitenfläche mit dem elektrisch isolierenden Material 14 versehen, so dass hierdurch eine sichere galvanische Trennung des dritten Messwandlers 30 gegenüber dem Träger 15 und den Temperaturfühler 31,32,33 der dritten Temperaturmesseinheit vorliegt. Ferner erfolgt durch das elektrisch isolierende Material 14 eine thermische Abschirmung des Trägers 15 gegenüber den dritten Messwandler 30. Die thermische Abschirmung gewährleistet insbesondere, dass der Träger 15 nicht durch eine durch eine Überlast hervorgerufene Erwärmung des dritten Messwandlers 30 beschädigt wird.

Der erste, zweite und dritte Messwandler 10,20,30 sowie die erste, zweite und dritten Temperaturmesseinheit sind jeweils baugleich ausgebildet. Die Auswertung der ermittelten Temperaturen der ersten, zweiten und dritten Temperaturmesseinheit kann folglich einheitlich erfolgen. Als erster, zweiter und dritter Messwandler 10,20,30 ist ebenso ein keramischer Widerstand denkbar, welcher eine charakteristische Erwärmungskurve aufweist.

Die einzelnen Strombahnen weisen folglich jeweils einen Messwandler 10,20,30 auf, welches in Abhängigkeit der anliegenden Stromhöhe und der Stromflusszeit eine charakteristische strombedingte Erwärmung vollzieht. Anhand einer Überwachung des strombedingten thermischen Verhaltens der jeweiligen Messwandler 10,20,30 und eines Vergleichs mit einem hinterlegten Referenzwert kann ein Rückschluss auf den vorliegenden Stromfluss in der entsprechenden Strombahn und somit ein Rückschluss auf den vorliegenden Betriebszustand des Verbrauchers 2 gewonnen werden, so dass eine anstehende Überlast am Verbraucher 4 durch die Auswerteeinheit 4 abgeleitet werden.

Der Auswerteeinheit 4 ist die Erwärmungscharakteristik des ersten, zweiten und dritten Messwandlers 10,20,30 bekannt und als Referenzwert hinterlegt, so dass die Auswerteeinheit 4 durch einen Abgleich der ermittelten Temperaturen der ersten, zweiten und/oder dritten Temperaturmesseinheit mit dem Referenzwert eine anstehende Überlast des elektrischen Verbrauchers 2 ermitteln kann. Bei einer ermittelten anstehenden Überlast des Verbrauchers 2 gibt die Auswerteeinheit 4 ein Warnsignal aus, so dass nicht abgebildete Schaltelemente des Verbrauchers 2 geschaltet werden und somit der Energiefluss zum Verbraucher 2 unterbunden wird. Auf diese Weise kann eine thermische Beschädigung des Verbrauchers 2 hinsichtlich einer Überlast durch die Vorrichtung 1 vermieden werden.

Dadurch, dass eine thermische Überlast des Verbrauchers 2 durch eine Erwärmung des Messwandlers 10,20,30 ermittelt wird, liegt ebenso ein thermisches Gedächtnis durch den Messwandler 10,20,30 vor, so dass es kurz nach einer thermischen Überlast nicht versehentlich zu einem Zuschalten des Verbrauchers kommen kann. Erst nachdem die Messwandler 10,20,30 eine definierte Abkühlung erfahren haben, kann der Verbraucher 2 erneut an das Versorgungsnetz geschaltet werden, so dass dieser wieder mit Strom versorgt wird. Die Ermittlung der notwendigen Abkühlung des Verbrauchers erfolgt durch eine Analyse der Temperaturen der Messwandler 10,20,30. Hierfür wird seitens der jeweiligen Temperaturmesseinheit die Temperatur des betroffenen Messwandlers 10,20,30 ermittelt und seitens der Auswerteeinheit 4 ausgewertet. Hierfür liegend der Auswerteeinheit 4 ebenso Abkühlungsreferenzwerte vor.

Die Temperaturfühler 11,12,13,21,22,23,31,32,33 sind jeweils Halbleiter, insbesondere Dioden, so dass mittels einer Analyse deren Spannung die Temperatur am Temperaturfühler und somit am zugehörigen Messpunkt des entsprechenden Messwandlers 10,20,30 ermittelt werden kann. Zur Steigerung der Messgenauigkeit können ebenso mehrere Temperaturfühler an den Messwandlern 10,20,30 platziert werden.

FIG 4 zeigt eine schematische Darstellung einer Ausführungsform eines Trägers 15 der in Figur 3 gezeigten Vorrichtung 1 zum Schutz des elektrischen Verbrauchers 2. Die Überwachungseinrichtung ist auf dem Träger 15, welcher eine FR4 Leiterplatte ist, aufgebracht. Die erste, zweite und dritte Temperaturmesseinheit sowie die Auswerteeinheit 4 sind auf einer zweiten Seitenfläche 152 des Trägers 15 montiert. Die Messwandler 10,20,30 sind auf der zur zweiten Seitenfläche 152 parallel gegenüberliegenden ersten Seitenfläche des Trägers 15 angeordnet. Die erste Seitenfläche des Trägers 15 ist vollständig mit einem zusätzlichen elektrisch isolierenden Material 14 bedeckt. Zwischen den Messwandlern 10,20,30 und dem Träger 15 befindet sich somit als elektrisch und thermisch isolierende Schicht das Material 14.

Der erste Messwandler 10 ist auf der ersten Seitenfläche des Trägers 15 angeordnet und ist eingangsseitig mit einer Leitung 101 und ausgangsseitig mit einer Leitung 102 verbunden. Über diese erste Strombahn erfolgt die Energieversorgung eines nachgeschalteten Verbrauchers (erste Phase).

Der zweite Messwandler 20 ist auf der ersten Seitenfläche des Trägers 15 angeordnet und ist eingangsseitig mit einer Leitung 201 und ausgangsseitig mit einer Leitung 202 verbunden. Über diese zweite Strombahn erfolgt die Energieversorgung des nachgeschalteten Verbrauchers (zweite Phase).

Der dritte Messwandler 30 ist auf der ersten Seitenfläche des Trägers 15 angeordnet und ist eingangsseitig mit einer Leitung 301 und ausgangsseitig mit einer Leitung 302 verbunden. Über diese dritte Strombahn erfolgt die Energieversorgung des nachgeschalteten Verbrauchers (dritte Phase).

Auf der zweiten Seitenfläche des Trägers 15 ist die erste, zweite und dritte Temperaturmesseinheit und die Auswerteeinheit 4 montiert. Durch den Träger 15 sowie der elektrisch isolierenden Schicht 14 erfolgt eine galvanische Trennung zwischen der ersten, zweiten und dritten Temperaturmesseinheit und der Auswerteeinheit 4 gegenüber den Messwandlern 10,20,30.

Die erste Temperaturmesseinheit umfasst drei Temperaturfühler 11,12,13, wobei zwei Temperaturfühler 11,13 im Randbereich (Anfang und Ende) der Längsachse einer Seitenfläche des ersten Messwandlers 10 angeordnet sind und ein Temperaturfühler 12 im Zentrum der Längsachse der Seitenfläche des ersten Messwandlers 10 angeordnet ist. Auf diese Weise kann die Erwärmung des ersten Messwandlers 10 ermittelt werden.

Die zweite Temperaturmesseinheit umfasst drei Temperaturfühler 21,22,23, wobei zwei Temperaturfühler 21,23 im Randbereich (Anfang und Ende) der Längsachse einer Seitenfläche des zweiten Messwandlers 20 angeordnet sind und ein Temperaturfühler 22 im Zentrum der Längsachse der Seitenfläche des zweiten Messwandlers 20 angeordnet ist. Auf diese Weise kann die Erwärmung des zweiten Messwandlers 20 ermittelt werden.

Die Temperaturfühler 31,32,33 der dritten Temperaturmesseinheit sind gegenüber dem dritten Messwandlers 30 äquivalent wie die Temperaturfühler der ersten Temperaturmesseinheit gegenüber dem ersten Messwandler 10 angeordnet.

Dadurch, dass die Temperaturfühler 11,12,13,21,22,23,31,32,33 bezüglich des Messwandlers 10,20,30 an der gegenüberliegenden Seitenfläche der Leiterplatte 5 angeordnet sind, wird erreicht, dass ein gute thermisch Kopplung zwischen den Temperaturfühlern 10,11,12,21,22,23,31,32,33 und den zugehörigen Messwandlern 10,20,30 bei gleichzeitiger galvanischer Trennung vorliegt. Durch das zusätzliche elektrisch isolierende Material 14 zwischen den Messwandlern 10,20,30 und dem Träger 15 wird der Träger 15 verbessert thermisch und elektrisch von den Messwandlern 10,20,30 abgeschirmt.

## Patentansprüche

1. Vorrichtung (1) zum Schutz eines Verbrauchers (2), wobei die Vorrichtung (1) eine erste Strombahn (100), welche eine erste und eine zweite Leitung (101,102) umfasst, und eine Überwachungseinrichtung, zur Ermittlung einer anstehenden Überlast des elektrischen Verbrauchers (2), umfasst, wobei die Überwachungseinrichtung eine erste Temperaturmesseinheit (18), einen Träger (15), eine Auswerteeinheit (4) und einen ersten Messwandler (10), welcher eine elektrisch leitende Verbindung zwischen der ersten und zweiten Leitung (101,102) der ersten Strombahn (100) herstellt, umfasst, wobei die erste Temperaturmesseinheit (18) von dem ersten Messwandler (10) galvanisch getrennt ist und einen ersten Temperaturfühler (11) umfasst, wobei der erste Temperaturfühler (11) auf dem Träger (15) derart angeordnet ist, dass er eine Temperatur des ersten Messwandlers (10) erfassen kann, wobei die Auswerteeinheit (4) eine anstehende Überlast am Verbraucher (2) mittels erfassten Temperaturen des ersten Temperaturfühlers (11) ermitteln kann, **dadurch gekennzeichnet dass** auf einer ersten Seitenfläche (151) des Trägers (15) ein zusätzliches elektrisch isolierendes Material (14) zwischen dem ersten Messwandler (10) und dem Träger (15) angeordnet ist.

2. Vorrichtung (1) nach Anspruch 1, wobei das zusätzliche elektrisch isolierende Material (14) unmittelbar zwischen dem ersten Messwandler (10) und dem Träger (15) angeordnet ist und der erste Temperaturfühler (11) auf einer der ersten Seitenfläche (151) abgewandten zweiten Seitenfläche (152) des Trägers (15) angeordnet ist.

3. Vorrichtung (1) nach einem der vorhergehenden Ansprüche, wobei der Bereich der ersten Seitenfläche (151) des Trägers (15), welcher dem ersten Messwandler (10) gegenüberliegt, vollständig mit dem zusätzlichen elektrisch isolierenden Material (14) bedeckt ist.

4. Vorrichtung (1) nach einem der vorhergehenden Ansprüche, wobei das zusätzliche elektrisch isolierende Material (14) eine Durchschlagfestigkeit von 10 Kilovolt bezogen auf die Gesamtstärke des elektrisch isolierenden Materials (15) aufweist.

5. Vorrichtung (1) nach einem der vorhergehenden Ansprüche, wobei das zusätzliche elektrisch isolierende Material (14) eine Temperatur von 500°C für mindestens zehn Millisekunden und eine Temperatur von 300°C für mindestens eine Minute ohne mechanische Beschädigung aushält.

6. Vorrichtung (1) nach einem der vorhergehenden Ansprüche, wobei die Auswerteeinheit (4) mittels erfassten Temperaturen der ersten Temperaturmesseinheit (18) ein zeitliches Erwärmungsverhalten des ersten Messwandlers (10) ermitteln kann und durch eine Auswertung des ermittelten zeitlichen Erwärmungsverhaltens des ersten Messwandlers (10) eine anstehende Überlast am Verbraucher (2) ermitteln kann.

7. Vorrichtung (1) nach Anspruch 6, wobei die Auswerteeinheit (4) anhand eines Vergleichs des ermittelten Erwärmungsverhaltens des ersten Messwandlers (10) mit einem in der Auswerteeinheit (4) hinterlegten Referenzwert eine anstehende Überlast am Verbraucher (2) ermitteln kann.

8. Vorrichtung (1) nach einem der vorhergehenden Ansprüche, wobei die erste Temperaturmesseinheit (18) ferner einen zweiten Temperaturfühler (12) umfasst, wobei der zweite Temperaturfühler (12) eine Referenztemperatur erfassen kann, wobei die Auswerteeinheit (4) eine anstehende Überlast am Verbraucher (2) mittels erfassten Temperaturen des ersten und zweiten Temperaturfühlers (11,12) ermitteln kann.

9. Vorrichtung (1) nach Anspruch 2 und 8, wobei die erste Temperaturmesseinheit (18) einen dritten Temperaturfühler (13) umfasst, wobei der zweite und dritte Temperaturfühler (12,13) auf der zweiten Seitenfläche (152) des Trägers (15) angeordnet ist, wobei der erste, zweite und dritte Temperaturfühler (11,12,13) der ersten Temperaturmesseinheit (18) gleichzeitig jeweils eine Temperatur des ersten Messwandlers (10) erfassen kann, wobei die Auswerteeinheit (4) anhand der erfassten Temperaturen der ersten Temperaturmesseinheit (18) eine anstehende Überlast am Verbraucher (2) ermitteln kann.

10. Vorrichtung (1) nach einem der vorhergehenden Ansprüche, wobei die erste Temperaturmesseinheit (18) einen zweiten und dritten Temperaturfühler (12,13) umfasst, wobei der erste, zweite und dritte Temperaturfühler (11,12,13) derart zum ersten Messwandler (10) angeordnet ist, dass der erste Temperaturfühler (11) eine Temperatur an einem ersten Messpunkt des ersten Messwandlers (10), der zweite Temperaturfühler (12) eine Temperatur an einem zweiten Messpunkt des ersten Messwandlers (10) und der dritte Temperaturfühler (13) eine Temperatur an einem dritten Messpunkt des ersten Messwandlers (10) erfassen kann, wobei in Bezug zu einer ersten Seitenfläche (153) des ersten Messwandlers (10) der zweite Messpunkt zwischen dem ersten und dritten Messpunkt auf der ersten Seitenfläche (153) des Messwandlers (10) liegt.

11. Vorrichtung (1) nach einem der vorhergehenden Ansprüche, wobei der Temperaturfühler (11,12,13) maximal 2 mm von dem ersten Messwandler (10) beabstandet ist.

12. Vorrichtung (1) nach einem der vorhergehenden Ansprüche, mit einer zweiten Strombahn (200), welche eine erste und eine zweite Leitung (201,202) umfasst, wobei die Überwachungseinrichtung ferner eine zweite Temperaturmesseinheit und einen zweiten Messwandler (20), welcher eine elektrisch leitende Verbindung zwischen der ersten und der zweiten Leitung (201, 202) der zweiten Strombahn (200) herstellt, umfasst, wobei die zweite Temperaturmesseinheit von dem zweiten Messwandler (20) galvanisch getrennt ist und einen ersten Temperaturfühler (21) umfasst, wobei auf der ersten Seitenfläche des Trägers (15) das zusätzliche elektrisch isolierende Material (14) zwischen dem zweiten Messwandler (20) und dem Träger (15) angeordnet ist und der erste Temperaturfühler (21) der zweiten Temperaturmesseinheit auf dem Träger (15) derart angeordnet ist, dass er eine Temperatur des zweiten Messwandlers (20) erfassen kann, wobei die Auswerteeinheit (4) eine anstehende Überlast am Verbraucher (2) mittels erfassten Temperaturen des ersten Temperaturfühlers (21) der zweiten Temperaturmesseinheit ermitteln kann.

13. Vorrichtung (1) nach einem der vorhergehenden Ansprüche, mit einer dritten Strombahn (300), welche eine erste und eine zweite Leitung (301,302) umfasst, wobei die Überwachungseinrichtung ferner eine dritte Temperaturmesseinheit und einen dritten Messwandler (30), welcher eine elektrisch leitende Verbindung zwischen der ersten und der zweiten Leitung (301, 302) der dritten Strombahn (300) herstellt, umfasst, wobei die dritte Temperaturmesseinheit von dem dritten Messwandler (30) galvanisch getrennt ist und einen ersten Temperaturfühler (31) umfasst, wobei auf der ersten Seitenfläche des Trägers (15) das elektrisch isolierende Material (14) zwischen dem dritten Messwandler (30) und dem Träger (15) angeordnet ist und der erste Temperaturfühler (31) der dritten Temperaturmesseinheit auf dem Träger (15) derart angeordnet ist, dass er eine Temperatur des dritten Messwandlers (20) erfassen kann, wobei die Auswerteeinheit (4) eine anstehende Überlast am Verbraucher (2) mittels erfassten Temperaturen des ersten Temperaturfühlers (31) der dritten Temperaturmesseinheit ermitteln kann.

14. Vorrichtung (1) nach einem der vorhergehenden Ansprüche, wobei der erste Messwandler (10) und sofern vorhanden zweite und/oder dritte Messwandler (20,30) jeweils ein Widerstand mit einer definierten Erwärmungskurve ist.

15. Vorrichtung (1) nach einem der vorhergehenden Ansprüche, wobei die Vorrichtung (1) ein Schaltgerät, insbesondere ein Überlastrelais oder ein Leistungsschalter, ist.

## Claims

1. Device (1) for protecting a load (2), wherein the device (1) comprises a first current path (100) comprising a first and a second line (101,102), and a monitoring unit, for determining imminent overloading of the electrical load (2), wherein the monitoring unit comprises a first temperature measuring unit (18), a substrate (15), an evaluation unit (4) and a first transducer (10) which establishes an electrically conductive connection between the first and second line (101,102) of the first current path (100), wherein the first temperature measuring unit (18) is electrically isolated from the first transducer (10) and comprises a first temperature sensor (11), wherein the first temperature sensor (11) is disposed on the substrate (15) such that it can measure a temperature of the first transducer (10), wherein the evaluation unit (4) can determine imminent overloading of the load (2) by means of measured temperatures of the first temperature sensor (11), **characterised in that** on a first lateral surface (151) of the substrate (15) an additional electrically insulating material (14) is disposed between the first transducer (10) and the substrate (15).

2. Device (1) according to claim 1, wherein the additional electrically insulating material (14) is disposed directly between the first transducer (10) and the substrate (15) and the first temperature sensor (11) is disposed on a second lateral surface (152) of the substrate (15) facing away from the first lateral surface (151).

3. Device (1) according to one of the preceding claims, wherein the region of the first lateral surface (151) of the substrate (15) that is opposite the first transducer (10) is completely covered with the additional electrically insulating material (14).

4. Device (1) according to one of the preceding claims, wherein the additional electrically insulating material (14) has a dielectric strength von 10 kilovolts referred to the overall thickness of the electrically insulating material (15).

5. Device (1) according to one of the preceding claims, wherein the additional electrically insulating material (14) withstands a temperature of 500°C for at least ten milliseconds and a temperature of 300°C for at least one minute without mechanical damage.

6. Device (1) according to one of the preceding claims, wherein the evaluation unit (4) can determine a heating behaviour over time of the first transducer (10) by means of measured temperatures of the first temperature measuring unit (18) and can determine imminent overloading of the load (2) by analysing the determined heating behaviour over time of the first transducer (10).

7. Device (1) according to claim 6, wherein the evaluation unit (4) can determine imminent overloading of the load (2) on the basis of a comparison of the determined heating behaviour of the first transducer (10) with a reference value stored in the evaluation unit (4).

8. Device (1) according to one of the preceding claims, wherein the first temperature measuring unit (18) additionally comprises a second temperature sensor (12), wherein the second temperature sensor (12) can measure a reference temperature, wherein the evaluation unit (4) can determine imminent overloading of the load (2) by means of measured temperatures of the first and second temperature sensor (11,12).

9. Device (1) according to claims 2 and 8, wherein the first temperature measuring unit (18) comprises a third temperature sensor (13), wherein the second and third temperature sensor (12,13) are disposed on the second lateral surface (152) of the substrate (15), wherein the first, second and third temperature sensor (11,12,13) of the first temperature measuring unit (18) can each simultaneously measure a temperature of the first transducer (10), wherein the evaluation unit (4) can determine imminent overloading of the load (2) on the basis of the measured temperatures of the first temperature measuring unit (18).

10. Device (1) according to one of the preceding claims, wherein the first temperature measuring unit (18) comprises a second and third temperature sensor (12,13), wherein the first, second and third temperature sensor (11,12,13) are disposed with respect to the first transducer (10) such that the first temperature sensor (11) can measure a temperature at a first measuring point of the first transducer (10), the second temperature sensor (12) a temperature at a second measuring point of the first transducer (10) and the third temperature sensor (13) a temperature at a third measuring point of the first transducer (10), wherein with respect to a first lateral surface (153) of the first transducer (10) the second measuring point is between the first and third measuring point on the first lateral surface (153) of the transducer (10).

11. Device (1) according to one of the preceding claims, wherein the temperature sensor (11,12,13) is no more than 2 mm away from the first transducer (10).

12. Device (1) according to one of the preceding claims, having a second current path (200) which comprises a first and a second line (201,202), wherein the monitoring unit additionally has a second temperature measuring unit and a second transducer (20) which establishes an electrically conductive connection between the first and the second line (201, 202) of the second current path (200), wherein the second temperature measuring unit is electrically isolated from the second transducer (20) and comprises a first temperature sensor (21), wherein, on the first lateral surface of the substrate (15), the additional electrically insulating material (14) is disposed between the second transducer (20) and the substrate (15) and the first temperature sensor (21) of the second temperature measuring unit is disposed on the substrate (15) such that it can measure a temperature of the second transducer (20), wherein the evaluation unit (4) can determine imminent overloading of the load (2) by means of measured temperatures of the first temperature sensor (21) of the second temperature measuring unit.

13. Device (1) according to one of the preceding claims, having a third current path (300) which comprises a first and a second line (301,302), wherein the monitoring unit additionally comprises a third temperature measuring unit and a third transducer (30) which establishes an electrically conductive connection between the first and the second line (301, 302) of the third current path (300), wherein the third temperature measuring unit is electrically isolated from the third transducer (30) and comprises a first temperature sensor (31), wherein, on the first lateral surface of the substrate (15), the electrically insulating material (14) is disposed between the third transducer (30) and the substrate (15) and the first temperature sensor (31) of the third temperature measuring unit is disposed on the substrate (15) such that it can measure a temperature of the third transducer (20), wherein the evaluation unit (4) can determine imminent overloading of the load (2) by means of measured temperatures of the first temperature sensor (31) of the third temperature measuring unit.

14. Device (1) according to one of the preceding claims, wherein the first transducer (10) and any second and/or third transducer (20,30) is in each case a resistor having a defined heating curve.

15. Device (1) according to one of the preceding claims, wherein the device (1) is a switching device, in particular an overload relay or a circuit breaker.

## Revendications

1. Installation ( 1 ) de protection d'un consommateur ( 2 ) dans laquelle l'installation ( 1 ) comprend une première voie ( 100 ) de courant, qui comprend une première et une deuxième lignes ( 101, 102 ), et un dispositif de contrôle pour la détermination d'une surcharge imminente du consommateur ( 2 ) électrique,
dans laquelle
le dispositif de contrôle comprend une première unité ( 18 ) de mesure de la température, un support ( 15 ), une unité ( 4 ) d'exploitation et un premier transducteur ( 10 ) de mesure, qui ménage une liaison conductrice de l'électricité entre la première et la deuxième lignes ( 101, 102 ) de la première voie ( 100 ) de courant, la première unité ( 18 ) de mesure de la température étant séparée galvaniquement du premier transducteur ( 10 ) de mesure et comprenant une première sonde ( 11 ) de température, dans laquelle la première sonde ( 11 ) de température est disposée sur le support ( 15 ) de manière à pouvoir détecter une température du premier transducteur ( 10 ) de mesure, l'unité ( 4 ) d'exploitation pouvant déterminer une surcharge imminente du consommateur ( 2 ) au moyen des températures détectées par la première sonde ( 11 ) de température, **caractérisée en ce que**, sur une première surface ( 151 ) latérale du support ( 15 ), un matériau ( 14 ) supplémentaire isolant électriquement est disposé entre le premier transducteur ( 10 ) de mesure et le support ( 15 ).

2. Installation ( 1 ) suivant la revendication 1, dans laquelle le matériau ( 14 ) supplémentaire isolant électriquement est disposé directement entre le premier transducteur ( 10 ) de mesure et le support ( 15 ) et la première sonde ( 11 ) de température est disposée sur une deuxième surface ( 152 ) latérale du support ( 15 ) éloignée de la première surface ( 151 ) latérale.

3. Installation ( 1 ) suivant l'une des revendications précédentes, dans laquelle la partie de la première surface ( 151 ) latérale du support ( 15 ) qui fait face au premier transducteur ( 10 ) de mesure est recouverte complètement du matériau supplémentaire isolant électriquement.

4. Installation ( 1 ) suivant l'une des revendications précédentes, dans laquelle le matériau ( 14 ) supplémentaire isolant électriquement a une rigidité diélectrique de 10 kilovolt rapportée à l'épaisseur totale du matériau ( 15 ) isolant électriquement.

5. Installation ( 1 ) suivant l'une des revendications précédentes, dans laquelle le matériau ( 14 ) supplémentaire isolant électriquement supporte une température de 500°C pendant au moins dix millisecondes et une température de 300°C pendant au moins une minute sans endommagement mécanique.

6. Installation ( 1 ) suivant l'une des revendications précédentes, dans laquelle l'unité ( 4 ) d'exploitation peut, au moyen des températures relevées par la première unité ( 18 ) de mesure de la température, déterminer un comportement d'échauffement dans le temps du premier transducteur ( 10 ) de mesure et peut, en exploitant le comportement d'échauffement dans le temps, qui est déterminé, du premier transducteur ( 10 ) de mesure, déterminer une surcharge imminente du consommateur ( 2 ).

7. Installation ( 1 ) suivant la revendication 6, dans laquelle l'unité ( 4 ) d'exploitation peut, à l'aide d'une comparaison entre le comportement à l'échauffement, qui a été déterminé, du premier transducteur ( 10 ) de mesure et une valeur de référence mémorisée dans l'unité ( 4 ) d'exploitation, déterminer une surcharge imminente du consommateur ( 2 ).

8. Installation ( 1 ) suivant l'une des revendications précédentes, dans laquelle la première unité ( 18 ) de mesure de la température comprend en outre une deuxième sonde ( 12 ) de température, la deuxième sonde ( 12 ) de température pouvant relever une température de référence, l'unité ( 4 ) d'exploitation pouvant déterminer une surcharge imminente du consommateur ( 2 ) au moyen des températures relevées par la première et la deuxième sondes ( 11, 12 ) de température.

9. Installation ( 1 ) suivant la revendication 2 et 8, dans laquelle la première unité ( 18 ) de mesure de la température comprend une troisième sonde ( 13 ) de température, la deuxième et la troisième sondes ( 12, 13 ) de température étant disposées sur la deuxième surface ( 152 ) latérale du support ( 15 ), la première, deuxième et troisième sondes ( 11, 12, 13 ) de température de l'unité ( 18 ) de mesure de la température pouvant relever en même temps respectivement une température du première transducteur ( 10 ) de mesure, l'unité ( 4 ) d'exploitation pouvant, à l'aide des températures relevées par la première unité ( 18 ) de mesure de la température, déterminer une surcharge imminente du consommateur ( 2 ).

10. Installation ( 1 ) suivant l'une des revendications précédentes, dans laquelle la première unité ( 18 ) de mesure de la température comprend une deuxième et une troisième sondes ( 12, 13 ) de température, la première, deuxième et troisième sondes ( 11, 12, 13 ) de température étant disposées par rapport au transducteur ( 10 ) de mesure, de manière à ce que la première sonde ( 11 ) de température puisse relever une température en un premier point de mesure du premier transducteur ( 10 ) de mesure, la deuxième sonde ( 12 ) de mesure une température en un deuxième point de mesure du premier transducteur ( 10 ) de mesure et la troisième sonde ( 13 ) de température une température en un troisième point de mesure du premier transducteur ( 10 ) de mesure, dans laquelle, par rapport à une première surface ( 153 ) latérale du premier transducteur ( 10 ) de mesure, le deuxième point de mesure se trouve entre le premier et le troisième points de mesure sur la première surface ( 153 ) latérale du transducteur ( 10 ) de mesure.

11. Installation ( 1 ) suivant l'une des revendications précédentes, dans laquelle la sonde ( 11, 12, 13 ) de température est à une distance au maximum de 2 mm du premier transducteur ( 10 ) de mesure.

12. Installation ( 1 ) suivant l'une des revendications précédentes, comprenant une deuxième voie ( 200 ) de courant, qui comprend une première et une deuxième lignes ( 201, 202 ), le dispositif de contrôle comprenant en outre une deuxième unité de mesure de la température et un deuxième transducteur ( 20 ) de mesure qui ménage une liaison conductrice de l'électricité entre la première et la deuxième lignes ( 201, 202 ) de la deuxième voie ( 200 ) de courant, dans laquelle la deuxième unité de mesure de la température est séparée galvaniquement du deuxième transducteur ( 20 ) de mesure et comprend une première sonde (21) de température, dans laquelle, sur la première surface latérale du support ( 15 ), le matériau ( 14 ) supplémentaire isolant électriquement est disposé entre le premier transducteur ( 20 ) de mesure et le support ( 15 ), et la première sonde ( 21 ) de température de la deuxième unité de mesure de la température est disposée sur le support ( 15 ) de manière à pouvoir relever une température du deuxième transducteur ( 20 ) de mesure, l'unité ( 4 ) d'exploitation pouvant déterminer une surcharge imminente du consommateur ( 2 ) au moyen des températures relevées par la première sonde ( 21 ) de température de la deuxième unité de mesure de la température.

13. Installation ( 1 ) suivant l'une des revendications précédentes, comprenant une troisième voie ( 300 ) de courant, qui comprend une première et une deuxième lignes ( 301, 302 ), le dispositif de contrôle comprenant en outre une troisième unité de mesure de la température et un troisième transducteur ( 30 ) de mesure qui ménage une liaison conductrice de l'électricité entre la première et la deuxième lignes ( 301, 302 ) de la troisième voie ( 300 ) de courant, dans laquelle la troisième unité de mesure de la température est séparée galvaniquement du troisième transducteur ( 30 ) de mesure et comprend une première sonde ( 31 ) de température, dans laquelle, sur la première surface latérale du support ( 15 ), le matériau ( 14 ) isolant électriquement est disposé entre le transducteur ( 30 ) de mesure et le support ( 15 ), et la première sonde ( 31 ) de température de la troisième unité de mesure de la température est disposée sur le support ( 15 ), de manière à pouvoir relever une température du troisième transducteur ( 20 ) de mesure, l'unité ( 4 ) d'exploitation pouvant déterminer une surcharge imminente du consommateur ( 2 ) au moyen des températures relevées par la première sonde ( 31 ) de température de la troisième unité de mesure de la température.

14. Installation ( 1 ) suivant l'une des revendications précédentes, dans laquelle le premier transducteur ( 10 ) de mesure et, pour autant qu'ils sont présents, le deuxième et/ou le troisième transducteurs ( 20, 30 ) de mesure, est respectivement une résistance ayant une courbe d'échauffement définie.

15. Installation ( 1 ) suivant l'une des revendications précédentes, dans laquelle l'installation est un appareil de commutation, notamment un relais de surcharge ou un disjoncteur.
